(19) Europäisches Patentamt
European Patent Office
Office européen des brevets

(11) **EP 4 415 362 A1**

(12) **EUROPEAN PATENT APPLICATION**
published in accordance with Art. 153(4) EPC

(43) Date of publication:
**14.08.2024 Bulletin 2024/33**

(51) International Patent Classification (IPC):
*H04N 19/61* (2014.01)    *H04N 19/11* (2014.01)
*H04N 19/593* (2014.01)    *H04N 19/107* (2014.01)
*H04N 19/176* (2014.01)    *H04N 19/184* (2014.01)

(21) Application number: **22878877.4**

(52) Cooperative Patent Classification (CPC):
**H04N 19/107; H04N 19/11; H04N 19/176;
H04N 19/184; H04N 19/593; H04N 19/61**

(22) Date of filing: **05.10.2022**

(86) International application number:
**PCT/KR2022/014977**

(87) International publication number:
**WO 2023/059056 (13.04.2023 Gazette 2023/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.10.2021 US 202163252155 P
27.10.2021 US 202163272673 P**

(71) Applicant: **LG Electronics Inc.
Yeongdeungpo-gu
Seoul 07336 (KR)**

(72) Inventors:
• **CHOI, Jangwon
Seoul 06772 (KR)**
• **CHOI, Jungah
Seoul 06772 (KR)**
• **KOO, Moonmo
Seoul 06772 (KR)**
• **KIM, Seung Hwan
Seoul 06772 (KR)**
• **LIM, Jaehyun
Seoul 06772 (KR)**
• **ZHAO, Jie
Seoul 06772 (KR)**

(74) Representative: **Plasseraud IP
104 Rue de Richelieu
CS92104
75080 Paris Cedex 02 (FR)**

(54) **NON-SEPARABLE PRIMARY TRANSFORM-BASED IMAGE ENCODING/DECODING METHOD AND DEVICE, AND RECORDING MEDIUM FOR STORING BITSTREAM**

(57)    An image encoding/decoding method and apparatus are provided. The image decoding method may comprise obtaining prediction information of a current block, determining a prediction mode of the current block based on the prediction information, selecting a transform kernel for generating a residual block of the current block based on the prediction mode being a predetermined mode, and generating the residual block of the current block by performing non-separable primary transform on the current block based on the selected transform kernel.

**FIG. 26**

```
                  START
                    │
                    ▼
      ┌─────────────────────────────┐  S2601
      │ DETERMINE PREDICTION MODE   │
      │     OF CURRENT BLOCK        │
      └─────────────────────────────┘
                    │
                    ▼
            ╱ PREDICTION MODE ╲      S2602
           ╱ = PREDETERMINED MODE? ╲
            ╲                ╱
                   │ YES
                   ▼            S2603
      ┌─────────────────────────────┐
      │ SELECT TRANSFORM KERNEL FOR │
      │ ENCODING RESIDUAL BLOCK OF  │
      │       CURRENT BLOCK         │
      └─────────────────────────────┘
                    │           S2604
                    ▼
      ┌─────────────────────────────┐
      │ ENCODE RESIDUAL BLOCK OF    │
      │ CURRENT BLOCK BY PERFORMING │
      │ NON-SEPARABLE PRIMARY       │
      │ TRANSFORM ON CURRENT BLOCK  │
      │ USING TRANSFORM KERNEL      │
      └─────────────────────────────┘
                    │
                    ▼
                   END
```

EP 4 415 362 A1

## Description

### Technical Field

The present disclosure relates to an image encoding/decoding method and apparatus and a recording medium for storing a bitstream, and, more particularly, to an image encoding/decoding method and apparatus based on non-separable primary transform and a recording medium for storing a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

An object of the present disclosure is to provide an image encoding/decoding method and apparatus for performing non-separable primary transform.

An object of the present disclosure is to provide an image encoding/decoding method and apparatus for performing non-separable primary transform on a block to which a combined inter and intra prediction (CIIP) mode is applied.

An object of the present disclosure is to provide an image encoding/decoding method and apparatus for performing non-separable primary transform on a block to which a geometric partitioning mode (GPM) is applied.

An object of the present disclosure is to provide an image encoding/decoding method and apparatus for performing non-separable primary transform when a decoder side mode derivation (DIMD) is used in a CIIP mode.

An object of the present disclosure is to provide an image encoding/decoding method and apparatus for performing non-separable primary transform when template-based intra mode derivation (TIMD) is used in a CIIP mode.

An object of the present disclosure is to provide an index signaling method when separable transform and non-separable primary transform are both included.

An object of the present disclosure is to provide an image encoding/decoding method and apparatus for performing non-separable primary transform based on residual characteristics of a current block or neighboring block.

Another object of the present disclosure is to provide a non-transitory computer-readable recording medium storing a bitstream generated by an image encoding method or apparatus according to the present disclosure.

Another object of the present disclosure is to provide a recording medium storing a bitstream received, decoded and used to reconstruct an image by an image decoding apparatus according to the present disclosure.

Another object of the present disclosure is to provide method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

According to an embodiment of the present disclosure, an image decoding method performed by an image decoding apparatus may comprise obtaining prediction information of a current block, determining a prediction mode of the current block based on the prediction information, selecting a transform kernel for generating a residual block of the current block based on the prediction mode being a predetermined mode, and generating the residual block of the current block by performing non-separable primary transform on the current block based on the selected transform kernel.

According to an embodiment of the present disclosure, the predetermined mode may be one of a combined inter and intra prediction (CIIP) mode or a geometric partitioning mode (GPM).

According to an embodiment of the present disclosure, whether to apply the non-separable primary transform may be determined based further on a number of pixels included in the current block.

According to an embodiment of the present disclosure, the image decoding method may further comprise obtaining information specifying whether to apply the non-separable primary transform based on the prediction mode of the current block being the predetermined mode, and whether to apply the non-separable primary transform to the current block may be determined based on the obtained information.

According to an embodiment of the present disclosure, a transform kernel set or transform kernel applied to the non-separable primary transform may be adaptively selected based on information about the predetermined mode.

According to an embodiment of the present disclosure, the information about the predetermined mode may comprise at least one of a CIIP weight or a CIIP intra mode, based on the predetermined mode being a CIIP mode.

According to an embodiment of the present disclosure, the CIIP intra mode may be at least one of a planar mode, a CIIP_PDPC mode, a CIIP_DIMD mode or a CIIP_TIMD mode.

According to an embodiment of the present disclosure, the information about the predetermined mode may comprise at least one of a GPM index, an Angle index or a Distance index, based on the predetermined mode being a GPM mode.

According to an embodiment of the present disclosure, the selecting the transform kernel for the current block may comprise obtaining transform kernel selection information of the current block, and the transform kernel selection information may be information for selecting one transform kernel from one or more non-separable transform kernels and one or more separable transform kernels.

According to an embodiment of the present disclosure, whether to the apply non-separable primary transform to the current block may be determined based further on residual characteristics of the current block or neighboring block.

According to an embodiment of the present disclosure, the residual characteristics may be determined based on a position of a last significant coefficient in the residual block of the current block or the number of significant coefficients in the residual block of the current block.

According to an embodiment of the present disclosure, an image decoding apparatus may comprise a memory and at least one processor. The at least one processor may obtain prediction information of a current block, determine a prediction mode of the current block based on the prediction information, select a transform kernel for generating a residual block of the current block based on the prediction mode being a predetermined mode, and generate the residual block of the current block by performing non-separable primary transform on the current block based on the selected transform kernel.

According to an embodiment of the present disclosure, an image encoding method performed by an image encoding apparatus may comprise determining a prediction mode of a current block, selecting a transform kernel for encoding a residual block of the current block based on the prediction mode being a predetermined mode, and encoding the residual block of the current block by performing non-separable primary transform on the current block using the determined transform kernel.

According to an embodiment of the present disclosure, the predetermined mode may be one of a combined inter and intra prediction (CIIP) mode or a geometric partitioning mode (GPM).

According to an embodiment of the present disclosure, whether to apply the non-separable primary transform may be determined based further on the number of pixels included in the current block.

According to an embodiment of the present disclosure, a transform kernel set or transform kernel applied to the non-separable primary transform may be adaptively selected based on information about the predetermined mode.

According to an embodiment of the present disclosure, the information about the predetermined mode may comprise at least one of a CIIP weight or a CIIP intra mode, based on the predetermined mode being a CIIP mode, and the CIIP intra mode may be at least one of a planar mode, a CIIP_PDPC mode, a CIIP_DnVID mode or a CIIP_TIMD mode.

According to an embodiment of the present disclosure, the information about the predetermined mode may comprise at least one of a GPM index, an Angle index or a Distance index, based on the predetermined mode being a GPM mode.

According to an embodiment of the present disclosure, in a computer-readable recording medium storing a bitstream generated by an image encoding method, the image encoding method may comprise determining a prediction mode of a current block, selecting a transform kernel for encoding a residual block of the current block based on the prediction mode being a predetermined mode, and encoding the residual block of the current block by performing non-separable primary transform on the current block using the determined transform kernel.

According to an embodiment of the present disclosure, a method of transmitting a bitstream generated by an image encoding method may comprise determining a prediction mode of a current block, selecting a transform kernel for encoding a residual block of the current block based on the prediction mode being a predetermined mode, and encoding the residual block of the current block by performing non-separable primary transform on the current block using the determined transform kernel.

**Advantageous Effects**

According to the present disclosure, it is possible to provide an image encoding/decoding method and apparatus with improved encoding/decoding efficiency.

According to the present disclosure, it is possible to provide an image encoding/decoding method and apparatus for performing non-separable primary transform.

According to the present disclosure, it is possible to provide an image encoding/decoding method and apparatus for performing non-separable primary transform on a block to which a combined inter and intra prediction (CIIP) mode is applied.

According to the present disclosure, it is possible to provide an image encoding/decoding method and apparatus for performing non-separable primary transform on a block to which a geometric partitioning mode (GPM) is applied.

According to the present disclosure, it is possible to provide an image encoding/decoding method and apparatus for performing non-separable primary transform when a decoder side mode derivation (DIMD) is used in a CIIP mode.

According to the present disclosure, it is possible to provide an image encoding/decoding method and apparatus for performing non-separable primary transform when template-based intra mode derivation (TIMD) is used in a CIIP mode.

According to the present disclosure, it is possible to provide an index signaling method when separable transform and non-separable primary transform are both included.

According to the present disclosure, it is possible to provide an image encoding/decoding method and apparatus for performing non-separable primary transform based on residual characteristics of a current block or neighboring block.

Also, according to the present disclosure, it is possible to provide a non-transitory computer-readable recording medium storing a bitstream generated by an image encoding method or apparatus according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically illustrating a video coding system, to which an embodiment of the present disclosure is applicable.

FIG. 2 is a view schematically illustrating an image encoding apparatus, to which an embodiment of the present disclosure is applicable.

FIG. 3 is a view schematically illustrating an image decoding apparatus, to which an embodiment of the present disclosure is applicable.

FIGS. 4a to 4d show reference samples defined in PDPC applied to various prediction modes.

FIG. 5 is a view illustrating 65 directional intra prediction modes.

FIG. 6 is a view illustrating a top neighboring block and a left neighboring block used in a CIIP weight derivation process.

FIG. 7 is a flowchart illustrating a CIIP mode application method using PDPC.

FIG. 8 shows an example of GPM split.

FIG. 9 is a view illustrating an LFNST application method.

FIG. 10 is a flowchart illustrating an encoding process in which AMT is performed.

FIG. 11 is a flowchart illustrating a decoding process in which AMT is performed.

FIG. 12 is a flowchart illustrating an encoding process in which NSST is performed.

FIG. 13 is a flowchart illustrating a decoding process in which NSST is performed.

FIGS. 14 and 15 are views illustrating a method of performing NSST.

FIGS. 16 and 17 are views illustrating a method of performing RST.

FIG. 18 is a view illustrating a transform and inverse transform process according to an embodiment of the present disclosure.

FIG. 19 is a flowchart illustrating a transform method according to an embodiment of the present disclosure.

FIG. 20 is a flowchart illustrating an inverse transform method according to an embodiment of the present disclosure.

FIG. 21 is a flowchart illustrating a subblock non-separable primary transform/inverse transform according to an embodiment of the present disclosure.

FIGS. 22a and 22b are views illustrating non-separable primary transform at an encoder stage, that is, a forward non-separable primary transform process.

FIG. 23 is a view illustrating a GPM used to perform symmetrical block split.

FIG. 24 is a flowchart showing an example of a primary transform method for a block to which a predetermined mode is applied.

FIG. 25 shows a flowchart illustrating a method of applying non-separable primary transform according to a predetermined condition in a block to which a predetermined mode is applied.

FIG. 26 is a flowchart illustrating an image encoding method according to an embodiment of the present disclosure.

FIG. 27 is a flowchart illustrating an image decoding method according to an embodiment of the present disclosure.

FIG. 28 is a view illustrating a content streaming system, to which an embodiment of the present disclosure is applicable.

## Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

## Overview of video coding system

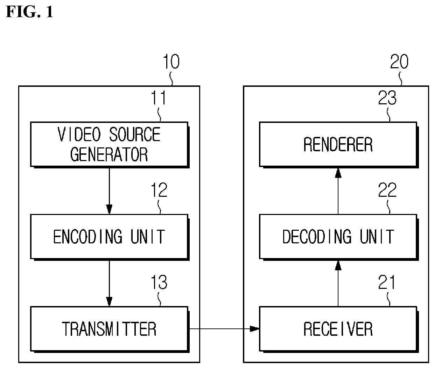

FIG. 1 is a view illustrating a video coding system, to which an embodiment of the present disclosure is applicable.

The video coding system according to an embodiment may include a encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit 12 and a transmitter 13. The decoding apparatus 20 according to an embodiment may include a receiver 21, a decoding unit 22 and a renderer 23. The encoding unit 12 may be called a video/image encoding unit, and the decoding unit 22 may be called a video/image decoding unit. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and transmit it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a separate transmission device from the encoder 120. In this case, the transmission device may include at least one processor that acquires encoded video/image information or data output in the form of a bitstream and a transmission unit that transfers it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

**Overview of image encoding apparatus**

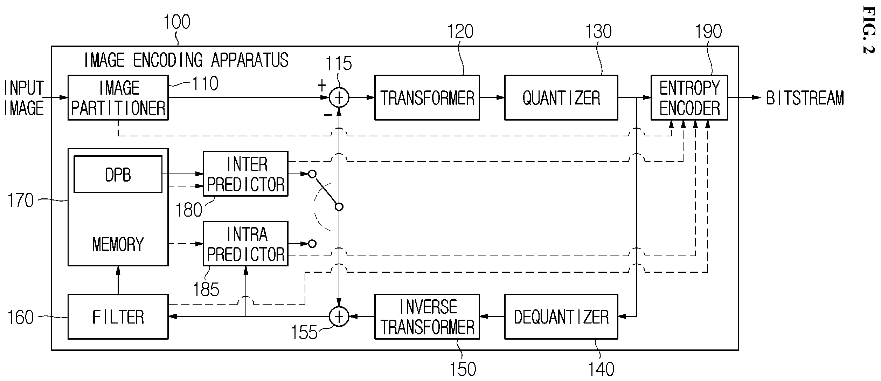

FIG. 2 is a view schematically illustrating an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "predictor". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QTBT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, as described below, luma mapping with chroma scaling (LMCS) is applicable in a picture encoding and/or reconstruction process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

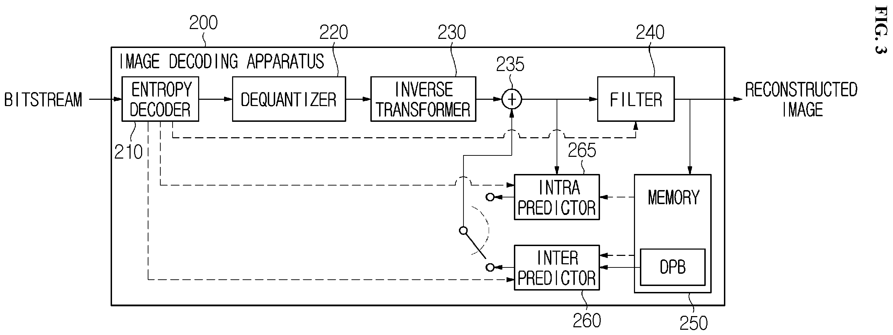

FIG. 3 is a view schematically illustrating an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "predictor". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 250 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

## Intra prediction mode/type based prediction sample derivation

The prediction unit of the encoding device/decoding apparatus may derive a reference sample according to an intra prediction mode of a current block among the neighboring reference samples of the current block, and may generate a prediction sample of the current block based on the reference sample.

For example, a prediction sample may be derived based on an average or interpolation of neighboring reference samples of the current block, and (ii) the prediction sample may be derived based on a reference sample present in a specific (prediction) direction with respect to the prediction sample among the neighboring reference samples of the current block. The case of (i) may be called a non-directional mode or a non-angular mode, and the case of (ii) may be called a directional mode or an angular mode. Also, the prediction sample may be generated through interpolation of the first neighboring sample and the second neighboring sample positioned in the opposite direction to the prediction direction of the intra prediction mode of the current block based on the prediction sample of the current block among the neighboring reference samples. The above-described case may be referred to as linear interpolation intra prediction (LIP). In addition, a temporary prediction sample of the current block may be derived based on the filtered neighboring reference samples, and the prediction sample of the current block may be derived by a weighted sum of at least one reference sample derived according to the intra prediction mode among the existing neighboring reference samples, that is, unfiltered neighboring reference samples, and the temporary prediction sample. The above-described case may be referred to as position dependent intra prediction (PDPC). In addition, a reference sample line with the highest prediction accuracy is selected from among multiple neighboring reference sample lines of the current block, to derive the prediction sample using the reference sample located in the prediction direction in the corresponding line, and, at this time, intra prediction coding may be performed in a manner of instructing (signaling) the used reference sample line to the decoding apparatus. The above-described case may be referred to as multi-reference line intra prediction (MRL) or MRL-based intra prediction. In addition, the current block is partitioned into vertical or horizontal sub-partitions to perform intra prediction based on the same intra prediction mode, but neighboring reference samples may be derived and used in units of sub-partitions. That is, in this case, the intra prediction mode for the current block is equally applied to the sub-partitions, but the intra prediction performance may be improved in some cases by deriving and using neighboring reference samples in units of sub-partitions. This prediction method may be called intra sub-partitions (IPS) or IPS-based intra prediction. Specific details will be described later. In addition, when a prediction direction based on the prediction sample points between neighboring reference samples, that is, when the prediction direction indicates a fractional sample position, the value of the prediction sample may be derived through interpolation of a plurality of reference samples located around the prediction direction (around the fractional sample position).

The above-described intra prediction methods may be called an intra prediction type to be distinguished from an intra prediction mode. The intra prediction type may be referred to as various terms such as an intra prediction technique or an additional intra prediction mode. For example, the intra prediction type (or additional intra prediction mode, etc.) may include at least one of the aforementioned LIP, PDPC, MRL or ISP. Information about the intra prediction type may be encoded in an encoding apparatus, included in a bitstream, and signaled to a decoding apparatus. The information about the intra prediction type may be implemented in various forms, such as flag information indicating whether each intra prediction type is applied or index information indicating one of several intra prediction types.

An MPM list for deriving the above-described intra prediction mode may be constructed differently depending on the intra prediction type. Alternatively, the MPM list may be commonly constructed regardless of the intra prediction type.

## Overview of PDPC (Position dependent intra prediction)

PDPC may indicate an intra prediction method of deriving filtered reference samples by performing filtering based on a filter for the PDPC, deriving a temporary prediction sample of the current block based on the intra prediction mode of the current block and the filtered reference samples, and deriving a prediction sample of the current block by performing a weighted sum of at least one reference sample derived according to the intra prediction mode among existing reference samples, that is, unfiltered reference samples, and the temporary prediction sample. Here, the predefined filter may be one of five 7-tap filters. Alternatively, the predefined filter may be one of a 3-tap filter, a 5-tap filter, and a 7-tap filter. The 3-tap filter, the 5-tap filter, and the 7-tap filter may indicate a filter having 3 filter coefficients, a filter having 5 filter coefficients, and a filter having 7 filter coefficients, respectively.

For example, the prediction result of the intra planar mode may be further modified by the PDPC.

Alternatively, for example, the PDPC is an intra planar mode, an intra DC mode, a horizontal intra prediction mode, a vertical intra prediction mode, a bottom-left intra prediction mode (i.e., #2 intra prediction mode), eight directional intra prediction modes adjacent to the bottom-left intra prediction mode, a top-right intra prediction mode and eight directional intra prediction modes adjacent to the top-right intra prediction mode, without separate signaling.

Specifically, when the PDPC is applied, a prediction sample of (x,y) coordinates predicted based on a linear combination of reference samples and an intra prediction mode may be derived as in the following equation.

$$pred(x,y)=(wL \times R_{-1,y}+wT \times R_{x,-1} - wTL \times R_{-1,-1}+(64-wL-wT+wTL) \times pred(x,y)+32)>>6$$

where, $R_{x,-1}$ and $R_{-1,y}$ denote upper and left reference samples located at the upper and left sides of the current sample of (x, y) coordinates, and $R_{-1,-1}$ denotes a top-left reference sample located at the top-left corner of the current block.

Meanwhile, when PDPC is applied to intra planar mode, intra DC mode, horizontal intra prediction mode, and vertical intra prediction mode, additional boundary filters such as a DC mode boundary filter or a vertical/horizontal mode edge filter of the existing HEVC may not be needed.

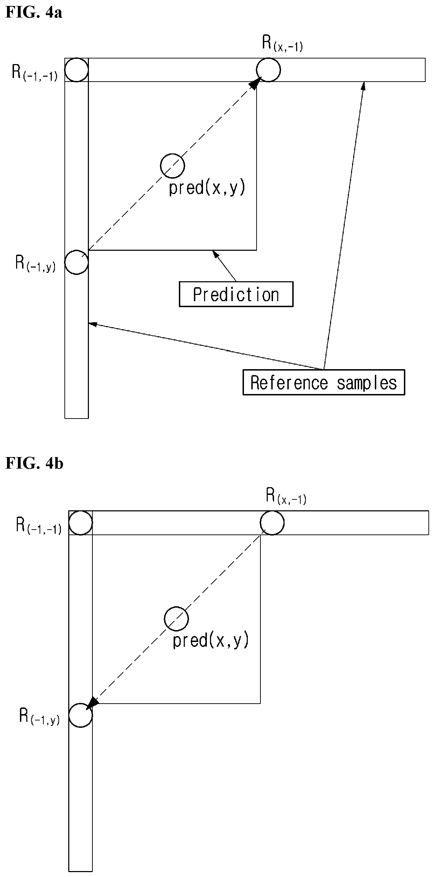

FIGS. 4a to 4d show reference samples ($R_{x,-1}$, $R_{-1,y}$, $R_{-1,-1}$) defined in PDPC applied to various prediction modes.

Meanwhile, the weights of the PDPC may be derived based on prediction modes. Weights of the PDPC may be derived as shown in Table 1 below.

[Table 1]

| Prediction modes | wT | wL | wTL |
|---|---|---|---|
| Diagonal top-right | 16 >> ( ( $y'$<<1 ) >> *shift*) | 16 >> ( ( $x'$<<1 ) >> *shift*) | 0 |
| Diagonal bottom-left | 16 >> ( ($y'$<<1 ) >> *shift* ) | 16 >> ( ($x'$<<1 ) >> *shift* ) | 0 |
| Adjacent diagonal top-right | 32 >> ( ($y'$<<1 ) >> *shift* ) | 0 | 0 |
| Adjacent diagonal bottom-left | 0 | 32 >> ( ( $x'$<<1 ) >> *shift* ) | 0 |

In position dependent intra prediction combination (PDPC), a prediction sample is generated using a reference sample according to a prediction mode, and then the prediction sample is improved using a neighboring reference sample. Instead of applying PDPC to all intra prediction modes, the PDPC is restrictively applied to Planar, DC, 2 (bottom-right mode), VDIA (top-left mode), Hor (horizontal mode), Ver (vertical mode), neighbor modes (#3 to #10 modes) of mode 2, and neighbor modes (#58 to #65 mode) of VDIA mode based on 65 directional intra prediction modes. In addition, instead of being applied to all prediction samples within a block to be currently encoded, it is applied variably considering the size of a block.

### Overview of PIMP (Decoder side intra mode derivation)

In DIMD, intra prediction may be derived from a weighted average of a planar mode two angular modes. The two angular modes may be selected by Histogram of Gradient (HoG) calculated from the neighboring pixels of a current block. When two angular modes are selected, the two selected predictors and planar predictor are calculated, and then the weighted average of the two predictors and the planar predictor may be used as a final predictor of the current block. To determine the weight, the corresponding amplitude of HoG may be used for each of the two angular modes.

The derived intra mode may be included in an intra MPM primary list. Therefore, a DIMD process may be performed before the MPM list is generated. The primary derived intra mode of the DIMD block may be stored with the block and used to construct an MPM list of neighboring blocks.

### Overview of TIMD (Template-base intra mode derivation)

For each intra prediction mode in the MPM, SATD between a prediction sample and a reconstructed sample of a template may be calculated. The first two intra prediction modes with minimum SATD may be selected as a TIMD mode. These two TIMD modes may be combined (weighted-sum) together with weights. This weighted intra prediction may be used to encode a current CU. PDPC (position dependent intra prediction combination) may be included in the derivation process of TIMD. That is, the calculation of SATD for deriving TIMD may be performed based on a prediction block on which PDPC has been performed.

The costs (costMode1, costMode2) of the two selected modes are compared to a threshold, and cost factor 2 in the test may be applied as follows.

$$costMode2 < 2*costMode1$$

When the above condition is true, combination is applied, otherwise only mode 1 may be used.

The weights of modes may be calculated by their SATD costs as follows:

$$weight1 = costMode2/(costMode1 + costMode2)$$

$$weight2 = 1 - weight1$$

**General of derivation of motion information**

Inter prediction may be performed using motion information of a current block. The encoding apparatus may derive optimal motion information for the current block through a motion estimation procedure. For example, the encoding apparatus may search for a similar reference block having a high correlation in units of fractional pixels within a predetermined search range in the reference picture using an original block in an original picture for the current block, thereby deriving motion information. Similarity of blocks may be derived based on a difference between phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to a decoding apparatus according to various methods based on the inter prediction mode.

**Overview of CIIP(Combined inter and intra prediction)**

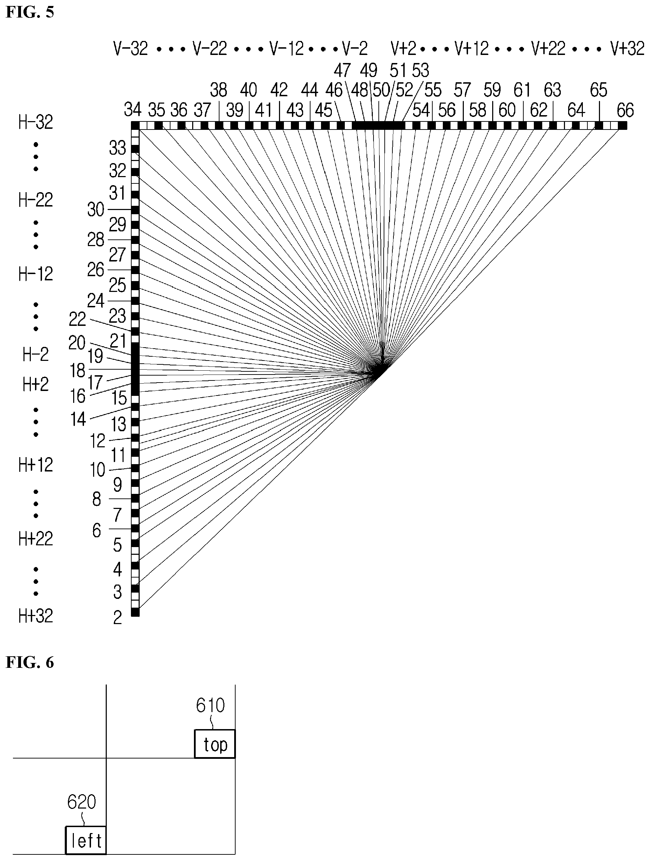

CIIP may be applied to a current block. An additional flag (e.g., ciip_flag) may be signalled to indicate if the CIIP mode is applied to the current CU. For example, when a CU is coded in merge mode, if the CU contains at least 64 luma samples (that is, CU width times CU height is equal to or larger than 64), and if both CU width and CU height are less than 128 luma samples, the additional flag may be signalled to indicate if the CIIP mode is applied to the current CU. As its name indicates, the CIIP prediction combines an inter prediction signal with an intra prediction signal. The inter prediction signal in the CIIP mode P_inter may be derived using the same inter prediction process applied to regular merge mode; and the intra prediction signal P_intra may be derived following the regular intra prediction process with the planar mode. Then, the intra and inter prediction signals may be combined using weighted averaging, where the weight value may be calculated depending on the coding modes of the top and left neighbouring blocks (see FIG. 6).

If the top neighbor is available and intra coded, then set isIntraTop to 1, otherwise set isIntraTop to 0,

If the left neighbor is available and intra coded, then set isIntraLeft to 1, otherwise set isIntraLeft to 0.

If (isIntraLeft + isIntraLeft) is equal to 2, then wt is set to 3

Otherwise, if (isIntraLeft + isIntraLeft) is equal to 1, then wt is set to 2

Otherwise, set wt to 1.

The CIIP prediction is formed as follows:

$$P_{\text{CIIP}} = \left( (4 - wt) * P_{inter} + wt * P_{intra} + 2 \right) \gg 2$$

**Overview of CIIP with PDPC blending**

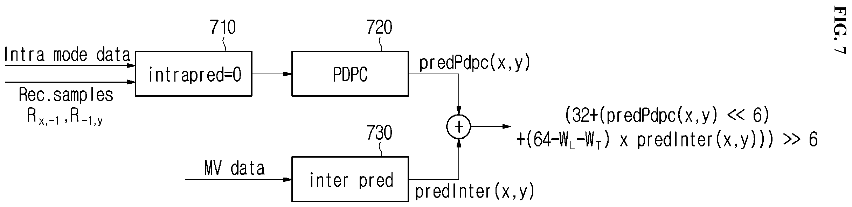

CIIP mode may be extended by combining with PDPC. In the extended mode (CIIP_PDPC), prediction of the regular merge mode may be improved using the upper reconstruction sample $R_{x,-1}$ and the left reconstruction sample $R_{-1,y}$. This improvement may inherit the PDPC scheme. The flowchart of prediction in CIIP_PDPC mode may be shown as FIG. 7. Here, $W_T$ and $W_L$ are weights according to the sample position of the block defined in PDPC.

CIIP_PDPC mode may be signaled together with CIIP mode. If the CIIP flag is true, another flag, such as a CIIP_PDPC flag, may be additionally signaled to indicate whether CIIP PDPC is used.

As shown in FIG. 7, the inter prediction signal predInter(x, y) of CIIP may be generated by the inter prediction process 730 using MV data as input. At this time, the MV data may be motion information obtained based on the regular merge mode, such as an existing CIIP mode.

Additionally, the intra prediction signal predPdpc(x, y) of CIIP may be generated by applying the PDPC 720 to a block generated by performing the intra prediction process 710 according to the planar mode (intrapred = 0).

Finally, based on predInter(x, y) and predPdpc(x, y), the prediction sample $P_{CIIP\_PDPC}$ (x, y) of the (x, y) coordinate within the prediction block may be derived according to the equation below.

$$P_{\text{CIIP}} = \big((4 - wt) * P_{inter} + wt * P_{intra} + 2\big) \gg 2$$

**Overview of CIIM (Geometric partitioning mode)**

GPM may be provided as one inter prediction mode. GPM mode may be signaled using a CU-level flag as one kind of merge mode, with other merge modes including the regular merge mode, the MMVD mode, the CIIP mode, and the subblock merge mode. In total 64 partitions may be supported by GPM mode for each possible CU size $w \times h = 2^m \times 2^n (m, n \in \{3 \cdots 6\})$ excluding 8x64 and 64x8.

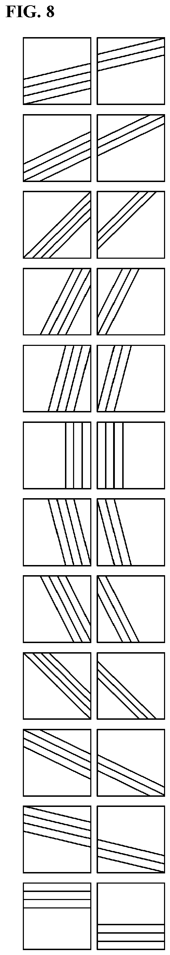

FIG. 8 shows an example of GPM split. Referring to FIG. 8, when GPM is used, a CU is split into two partitions by a geometrically located straight line. The location of the splitting line may be derived from the angle and offset parameters of a specific partition. Each partition of a geometric partition in the CU may be inter-predicted using its own motion vector. Only uni-prediction may be allowed for each partition. That is, each part has one motion vector and one reference index. The uni-prediction motion constraint may be applied to ensure that same as the conventional bi-prediction, only two motion compensated prediction are needed for each CU.

If GPM is used for the current CU, then a geometric partition index indicating the partition mode of the geometric partition (angle and offset), and two merge indices (one for each partition) are further signalled. The number of maximum GPM candidate size is signalled explicitly in SPS and may specify syntax binarization for GPM merge indices. After predicting each of part of the geometric partition, the sample values along the geometric partition edge may be adjusted using a blending processing with adaptive weights. This is the prediction signal for the whole CU, and transform and quantization process will be applied to the whole CU as in other prediction modes.

**Overview of transform/inverse transform**

As described above, the encoding apparatus may derive a residual block (residual samples) based on a block (prediction blocks) predicted through intra/inter/IBC prediction, and derive quantized transform coefficients by applying transform and quantization to the derived residual samples. Information on the quantized transform coefficients (residual information) may be included and encoded in a residual coding syntax and output in the form of a bitstream. The decoding apparatus may acquire and decode information on the quantized transform coefficients (residual information) from the bitstream to derive quantized transform coefficients. The decoding apparatus may derive residual samples through dequantization/inverse transform based on the quantized transform coefficients. As described above, at least one of quantization/dequantization and/or transform/inverse transform may be skipped. When quantization/dequatization is skipped, the quantized transform coefficient may be referred to as a transform coefficient. When transform/inverse transform is skipped, the transform coefficient may be referred to as a coefficient or a residual coefficient or may still be referred to a transform coefficient for uniformity of expression. Whether transform/inverse transform is skipped may be signaled based on transform_skip_flag.

In addition, in the present disclosure, a quantized transform coefficient and a transform coefficient may be referred to as a transform coefficient and a scaled transform coefficient, respectively. In this case, the residual information may include information about the transform coefficient(s), and the information about the transform coefficient(s) may be signaled through residual coding syntax. Transform coefficients may be derived based on the residual information (or information about the transform coefficient(s)), and scaled transform coefficients may be derived through inverse transform (scaling) of the transform coefficients. Residual samples may be derived based on inverse transform (transform) of the scaled transform coefficients. This may be similarly applied/expressed in other parts of the present disclosure.

Transform/inverse transform may be performed based on transform kernel(s). For example, according to the present disclosure, a multiple transform selection (MTS) scheme is applicable. In this case, some of a plurality of transform kernel sets may be selected and applied to a current block. A transform kernel may be referred to as various terms such as a transform matrix or a transform type. For example, the transform kernel set may indicate a combination of a vertical-direction transform kernel (vertical transform kernel) and a horizontal-direction transform kernel (horizontal transform kernel).

EP 4 415 362 A1

For example, MTS index information (or mts_idx syntax element) may be generated/encoded in an encoding apparatus and signaled to a decoding apparatus to indicate one of the transform kernel sets. For example, a transform kernel set according to the value of the MTS index information may be derived as shown in Table 2.

[Table 2]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

Table 2 shows tyTypeHor and trTypeVer values according to tu_mts_idx[x0][y0].

For example, the transform kernel set may be determined as shown in Table 3 based on cu_sbt_horizontal_flag and cu_sbt_pos_flag.

[Table 3]

| cu_sbt_horizontal_flag | cu_sbt_pos_flag | trTypeHor | trTypeVer |
|---|---|---|---|
| 0 | 0 | 2 | 1 |
| 0 | 1 | 1 | 1 |
| 1 | 0 | 1 | 2 |
| 1 | 1 | 1 | 1 |

Table 3 shows tyTypeHor and trTypeVer values according to cu_sbt_horizontal_flag and cu_sbt_pos_flag. Here, cu_sbt_horizontal_flag equal to 1 may indicate that a current coding unit is horizontally split into two transform blocks. In contrast, cu_sbt_horizontal_flag equal to 0 may indicate that the current coding unit is vertically split into two transform blocks. In addition, cu_sbt_pos_flag equal to 1 may indicate that the syntax elements tu_cbf_luma, tu_cbf_cb, and tu_cbf_cr of a first transform unit in the current coding unit are not present in the bitstream. In contrast, cu_sbt_pos_flag equal to 0 may indicate that the syntax elements tu_cbf_luma, tu_cbf_cb, and tu_cbf_cr of a second transform unit in the current coding unit are not in the bitstream.

Meanwhile, in Tables 2 and 3, trTypeHor may represent a horizontal-direction transform kernel, and trTypeVer may represent a vertical-direction transform kernel. A trTypeHor/trTypeVer value of 0 may indicate DCT2, a trTypeHor/trTypeVer value of 1 may indicate DST7, and a trTypeHor/trTypeVer value of 2 may indicate DCT8. However, this is an example, and different values may be mapped to different DCT/DST by promise.

Table 4 exemplarily shows basis functions for DCT2, DCT8, and DST7 described above.

[Table 4]

| Transform Type | Basis function $T_i(j)$, $i,j = 0, 1,..., N-1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ $$\text{where} \quad \omega_0 = \begin{cases} \sqrt{\frac{2}{N}} & i = 0 \\ 1 & i \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |

(continued)

| Transform Type | Basis function $T_i(j)$, $i,j = 0, 1,..., N\text{-}1$ |
|---|---|
| DST-VII | $$T_i(j) = \sqrt{\frac{4}{2N+1}} \cdot \sin\left(\frac{\pi \cdot (2i+1) \cdot (j+1)}{2N+1}\right)$$ |

In the present disclosure, the MTS-based transform is applied as primary transform, and secondary transform may be further applied. The secondary transform may be applied only to coefficients in the upper left wxh region of a coefficient block to which the primary transform is applied, and may be called reduced secondary transform (RST). For example, w and/or h may be 4 or 8. In transform, the first transform and the second transform may be sequentially applied to the residual block, and in the inverse transform, the inverse secondary transform and the inverse primary transform may be sequentially applied to the transform coefficients. The secondary transform (RST transform) may be called low frequency coefficients transform (LFCT) or low frequency non-separable transform (LFNST). The inverse secondary transform may be called inverse LFCT or inverse LFNST.

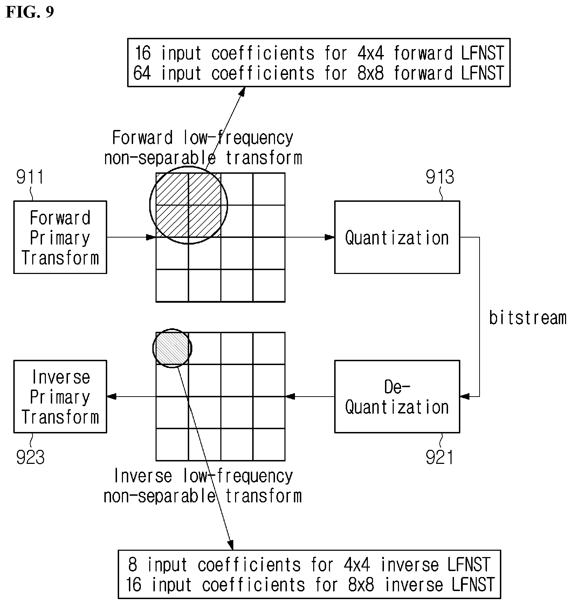

FIG. 9 is a view illustrating an LFNST application method.

Referring to FIG. 9, LFNST is applicable between forward primary transform 911 and quantization 913 at an encoder stage, and is applicable between dequantization 921 and inverse primary transform (or primary inverse transform) 923 at a decoder stage.

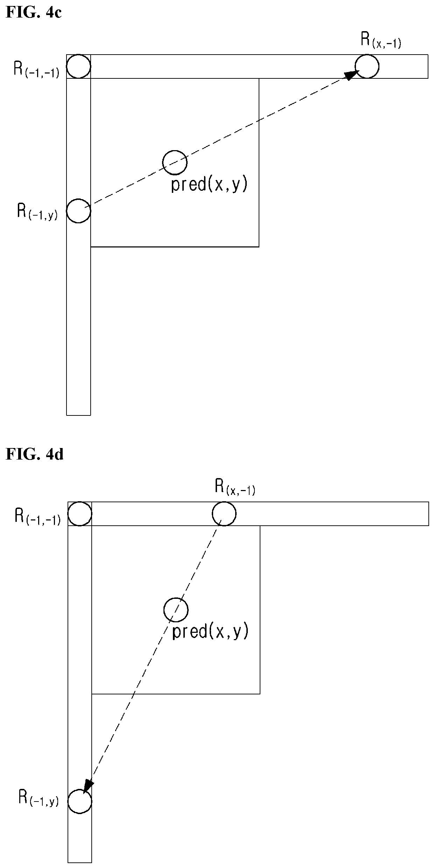

In LFNST, 4x4 non-separable transform or 8x8 non-separable transform may be (selectively) applied depending on the block size. For example, 4x4 LFNST may be applied to relatively small blocks (i.e., min (width, height) < 8), and 8x8 LFNST may be applied to relatively large blocks (i.e., min (width, height) > 4). In FIG. 4, as an example, it is shown that 4x4 forward LFNST is applied to 16 input coefficients, and 8x8 forward LFNST is applied to 64 input coefficients. In addition, in FIG. 4, as an example, it is shown that 4x4 backward LFNST may be applied to 8 input coefficients, and 8x8 inverse LFNST may be applied to 16 input coefficients.

In LFNST, a total of four transform sets and two non-separable transform matrices (kernels) for each transform set may be used. Mapping from an intra prediction mode to a transform set may be predefined as shown in Table 5.

[Table 5]

| IntraPredMode | Tr. set index |
|---|---|
| IntraPredMode < 0 | **1** |
| 0 <= IntraPredMode <= 1 | 0 |
| 2 <= IntraPredMode <= 12 | **1** |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | **1** |
| 81 <= IntraPredMode<= 83 | 0 |

Referring to Table 5, if three CCLM modes with prediction mode numbers of 81 to 83 (i.e., 81≤IntraPredMode≤83) are used for a current block, transform set 0 may be selected for a current chroma block. For each transform set, the selected non-separable secondary transform candidate may be additionally specified by an explicitly signaled LFNST index. The index may be signaled within the bitstream once per Intra CU after the transform coefficients.

Meanwhile, transform/inverse transform may be performed in units of CU or TU. That is, transform/inverse transform is applicable to residual samples in a CU or residual samples in a TU. A CU size may be equal to a TU size or a plurality of TUs may be present in a CU region. Meanwhile, the CU size may generally indicate a luma component (sample) CB size. The TU size may generally indicate a luma component (sample) TB size. A chroma component (sample) CB or TB size may be derived based on the luma component (sample) CB or TB size depending on a component ratio according to a color format (chroma format) (e.g., 4:4:4, 4:2:2, 4:2:0, etc.). The TU size may be derived based on maxTbSize. For example, when the CU size is greater than maxTbSize, a plurality of TUs (TBs) of maxTbSize may be derived from the CU and transform/inverse transform may be performed in units of TU (TB). maxTbSize may be considered to determine whether to apply various intra prediction types such as ISP. Information on maxTbSize may be predetermined or may be generated and encoded in the encoding apparatus and signaled to the decoding apparatus.

As described above, transform may be applied to residual blocks. This is to decorrelate residual blocks as much as possible, concentrate coefficients at low frequencies, and create a zero tail at an end of a block. A transform part in JEM software includes two main functions: core transform and secondary transform. The core transform consists of DCT (discrete cosine transform) and DST (discrete sine transform) families that are applied to all rows and columns of the residual block. Secondary transform may then be additionally applied to the upper left corner of the output of the core transform. Similarly, the inverse transform may be applied in the following order: secondary inverse transform and core inverse transform. Specifically, secondary inverse transform may be applied to the upper left corner of the coefficient block. The core inverse transform is then applied to the rows and columns of the output of the secondary inverse transform. Core transform/inverse transform may be referred to as primary transform/inverse transform.

**Overview of AMT (Adaptive multiple core transform)**

In addition to the existing DCT-2 and 4x4 DST-7, the adaptive multiple transform or explicit multiple transform (AMT or EMT) technique may be used for residual coding for inter- and intra-coded blocks. Hereinafter, AMT and EMT will be used interchangeably. In AMT, in addition to existing transforms, multiple transforms selected from DCT/DST families may be used. The newly introduced transform matrices in JEM are DST-7, DCT-8, DST-1, and DCT-5. The basis functions of DST/DCT used in AMT are shown in Table 6.

[Table 6]

| Transform Type | Basis function. $T_i(j)$, $i,j=0, 1,..., N-1$ |
|---|---|
| OCT-II | $T_i(j) = \omega_0 \cdot \sqrt{\dfrac{2}{N}} \cdot \cos\left(\dfrac{\pi \cdot i \cdot (2j + 1)}{2N}\right)$ <br><br> where $\omega_0 = \begin{cases} \sqrt{\dfrac{2}{N}} & i = 0 \\ 1 & i \neq 0 \end{cases}$ <br><br> where $\omega_0 = \begin{cases} \sqrt{\dfrac{2}{N}} & i = 0 \\ 1 & i \neq 0 \end{cases}$ |
| DCT-V | $T_i(j) = \omega_0 \cdot \omega_1 \cdot \sqrt{\dfrac{2}{2N-1}} \cdot \cos\left(\dfrac{2\pi \cdot i \cdot j}{2N-1}\right),$ <br><br> where $\omega_0 = \begin{cases} \sqrt{\dfrac{2}{N}} & i = 0 \\ 1 & i \neq 0 \end{cases}, \omega_1 = \begin{cases} \sqrt{\dfrac{2}{N}} & j = 0 \\ 1 & j \neq 0 \end{cases}$ <br><br> where $\omega_0 = \begin{cases} \sqrt{\dfrac{2}{N}} & i = 0 \\ 1 & i \neq 0 \end{cases}, \omega_1 = \begin{cases} \sqrt{\dfrac{2}{N}} & j = 0 \\ 1 & j \neq 0 \end{cases}$ |
| DCT-VIII | $T_i(j) = \sqrt{\dfrac{4}{2N + 1}} \cdot \cos\left(\dfrac{\pi \cdot (2i + 1) \cdot (2j + 1)}{4N + 2}\right)$ |
| DST-I | $T_i(j) = \sqrt{\dfrac{2}{N + 1}} \cdot \sin\left(\dfrac{\pi \cdot (i + 1) \cdot (j + 1)}{N + 1}\right)$ |

(continued)

| Transform Type | Basis function. $T_i(j)$, $i,j=0, 1,..., N-1$ |
|---|---|
| DST-VII | $T_i(j) = \sqrt{\dfrac{4}{2N+1}} \cdot \sin\left(\dfrac{\pi \cdot (2i+1) \cdot (j+1)}{2N+1}\right)$ |

EMT may be applied to CUs with a width and height less than or equal to 64, and whether EMT is applied may be controlled by a CU level flag. For example, if the CU level flag is 0, DCT-2 is applied to the CU to encode the residue. For a luma coding block within a CU to which EMT is applied, two additional flags are signaled to identify horizontal and vertical transform to be used. In JEM, the residual of a block may be coded in a transform skip mode. For intra residual coding, due to different residual statistics of different intra prediction modes, a mode-dependent transform candidate selection process may be used. For example, three transform subsets may be defined as shown in Table 7, and the transform subset may be selected based on an intra prediction mode as shown in Table 8.

[Table 7]

| Transform Set | Transform Candidates |
|---|---|
| 0 | DST-VII, DCT-VIII |
| 1 | DST-VII, DST-I |
| 2 | DST-VII, DCT-VIII |

[Table 8]

| Intra Mode | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| V | 2 | 1 | 0 | 1 | 0 | 1 | 0 | 1 | 0 | 1 | 0 | 1 | 0 | 1 | 0 | 0 | 0 | 0 |
| H | 2 | 1 | 0 | 1 | 0 | 1 | 0 | 1 | 0 | 1 | 0 | 1 | 0 | 1 | 2 | 2 | 2 | 2 |
| Intra Mode | 18 | 19 | 20 | 21 | 22 | 23 | 24 | 25 | 26 | 27 | 28 | 29 | 30 | 31 | 32 | 33 | 34 | |
| V | 0 | 0 | 0 | 0 | 0 | 1 | 0 | 1 | 0 | 1 | 0 | 1 | 0 | 1 | 0 | 1 | 0 | |
| H | 2 | 2 | 2 | 2 | 2 | 1 | 0 | 1 | 0 | 1 | 0 | 1 | 0 | 1 | 0 | 1 | 0 | |
| Intra Mode | 35 | 36 | 37 | 38 | 39 | 40 | 41 | 42 | 43 | 44 | 45 | 46 | 47 | 48 | 49 | 50 | 51 | 52 |
| V | 1 | 0 | 1 | 0 | 1 | 0 | 1 | 0 | 1 | 0 | 1 | 2 | 2 | 2 | 2 | 2 | 2 | 2 |
| H | 1 | 0 | 1 | 0 | 1 | 0 | 1 | 0 | 1 | 0 | 1 | 0 | 0 | 0 | 0 | 0 | 0 | 0 |
| Intra Mode | 53 | 54 | 55 | 56 | 57 | 58 | 59 | 60 | 61 | 62 | 63 | 64 | 65 | 66 | | | | |
| V | 2 | 2 | 1 | 0 | 1 | 0 | 1 | 0 | 1 | 0 | 1 | 0 | 1 | 0 | | | | |
| H | 0 | 0 | 1 | 0 | 1 | 0 | 1 | 0 | 1 | 0 | 1 | 0 | 1 | 0 | | | | |

With the subset concept, the transform subset may be first identified based on Table 7 using the intra prediction mode of the CU with CU-level EMT_CU_flag equal to 1. Then, for each of the horizontal (EMT_TU_horizontal_flag) and vertical (EMT_TU_vertical_flag) transforms, one of the two transform candidates in the identified transform subset may be selected based on explicit signaling using flags according to Table 8.

[Table 9]

| Configuration group | | Horizontal (row) transform | Vertical (column) transform | 35 intra Prediction modes | 67 intra Prediction modes |
|---|---|---|---|---|---|
| Group 0 (G0) | 0 | DST7 | DST7 | 0 | 0 |
| | 1 | DCT5 | DST7 | | |
| | 2 | DST7 | DCT5 | | |
| | 3 | DCT5 | DCT5 | | |
| Group 1 (G1) | 0 | DST7 | DST7 | 1, 3, 5, 7, 13, 15, 17, 19, 21, 23, 29, 31, 33 | 1, 3, 5, 7, 9, 11, 13, 23, 25, 27, 29, 31, 33, 35, 37, 39, 41, 43, 45, 55, 57, 59, 61, 63, 65 |
| | 1 | DST1 | DST7 | | |
| | 2 | DST7 | DST1 | | |
| | 3 | DST1 | DST1 | | |
| Group 2 (G2) | 0 | DST7 | DST7 | 2, 4, 6, 14, 16, 18, 20, 22, 30, 32, 34 | 2, 4, 6, 8, 10, 12, 24, 26, 28, 30, 32, 34, 36, 38, 40, 42, 44, 56, 58, 60, 64, 66 |
| | 1 | DCT8 | DST7 | | |
| | 2 | DST7 | DCT8 | | |
| | 3 | DCT8 | DCT8 | | |
| Group 3 (G3) | 0 | DST7 | DST7 | 8, 9, 10, 11, 12 (Neighboring angles to horizontal directions) | 14, 15, 16, 17, 18, 19, 20, 21, 22 (Neighboring angles to horizontal directions) |
| | 1 | DCT5 | DST7 | | |
| | 2 | DST7 | DCT8 | | |
| | 3 | DCT5 | DCT8 | | |
| Group 4 (G4) | 0 | DST7 | DST7 | 24, 25, 26, 27, 28 (Neighboring angles to vertical directions) | 46, 47, 48, 49, 50, 51, 52, 53, 54 (Neighboring angles to vertical directions) |
| | 1 | DCT8 | DST7 | | |
| | 2 | DST7 | DCT5 | | |
| | 3 | DCT8 | DCT5 | | |
| Group 5 (G5) | 0 | DCT8 | DCT8 | Inter prediction | Inter prediction |
| | 1 | DST7 | DCT8 | | |
| | 2 | DCT8 | DST7 | | |
| | 3 | DST7 | DST7 | | |

Table 9 shows a transform configuration group to which AMT is applied.

Referring to Table 9, transform configuration groups are determined based on the prediction mode, and the number of groups may be a total of 6 (G0 to G5). In addition, G0 to G4 correspond to a case where intra prediction is applied, and G5 may indicate transform combinations (or a transform set, a transform combination set) applied to the residual block generated by inter prediction.

One transform combination consists of horizontal transform (or row transform) applied to the rows of the corresponding 2D block and a vertical transform (or column transform) applied to the columns.

Here, all transform configuration groups may each have four transform combination candidates. The four transform combination candidates may be selected or determined through transform combination indices of 0 to 3, and the transform combination index may be encoded and transmitted from the encoder to the decoder.

For example, residual data (or residual signal) obtained through intra prediction may have different statistical characteristics depending on the intra prediction mode. Therefore, as shown in Table 9, transforms other than the general cosine transform may be applied to each intra prediction. In the present disclosure, the transform type may be expressed as, for example, DCT-Type 2, DCT-II, or DCT-2.

Table 9 shows the case of using 35 intra prediction modes and the case of using 67 intra prediction modes. A plurality of transform combinations may be applied to each transform configuration group divided in each intra prediction mode column. For example, a plurality of transform combinations may be composed of four (row direction transform, column direction transform) combinations. As a specific example, in group 0, DST-7 and DCT-5 may be applied in both the row (horizontal) direction and the column (vertical) direction and thus a total of 4 combinations are possible.

Since a total of four transform kernel combinations may be applied to each intra prediction mode, a transform combination index for selecting one of them may be transmitted for each transform unit. In the present disclosure, the transform combination index may be referred to as an AMT index and may be expressed as amt_idx.

In addition, in addition to the transform kernels presented in Table 9, there may be a case where DCT-2 is optimal in both the row and column directions due to the characteristics of the residual signal. Therefore, transform may be applied adaptively by defining an AMT flag for each coding unit. Here, if the AMT flag is 0, DCT-2 is applied to both the row direction and column direction, and if the AMT flag is 1, one of four combinations may be selected or determined through the AMT index.

For example, when the AMT flag is 0 and the number of transform coefficients for one transform unit is less than 3, the transform kernels in Table 9 are not applied and DST-7 may be applied to both the row and column directions.

For example, if the transform coefficient values are first parsed and the number of transform coefficients is less than 3, the AMT index is not parsed and DST-7 is applied, thereby reducing the amount of transmitted additional information.

As an example, AMT may be applied only when both the width and height of the transform unit are 32 or less.

As an example, Table 9 may be preset through offline training.

As an example, the AMT index may be defined as one index that may simultaneously indicate a combination of horizontal transform and vertical transform. Alternatively, the AMT index may be defined as a separate horizontal transform index and vertical transform index.

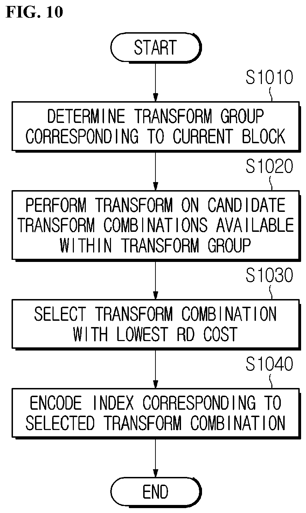

FIG. 10 is a flowchart illustrating an encoding process in which AMT is performed.

AMT may be applied regardless of primary or secondary transform. In other words, there is no restriction that it must be applied to only one of the two, and both may be applied. Here, the primary transform may refer to transform for initially transforming the residual block, and the secondary transform may refer to transform for applying the transform to a block generated as a result of the primary transform.

First, the encoding apparatus may determine a transform group corresponding to a current block (S1010). Here, the transform group may refer to the transform group described above with reference to Table 9, but is not limited thereto and may be composed of other transform combinations.

The encoding apparatus may perform transform on candidate transform combinations available within the transform group (S1020).

As a result of performing the transform, the encoding apparatus may determine or select a transform combination with the lowest RD (Rate Distortion) cost (S1030).

The encoding apparatus may encode a transform combination index corresponding to the selected transform combination (S1040).

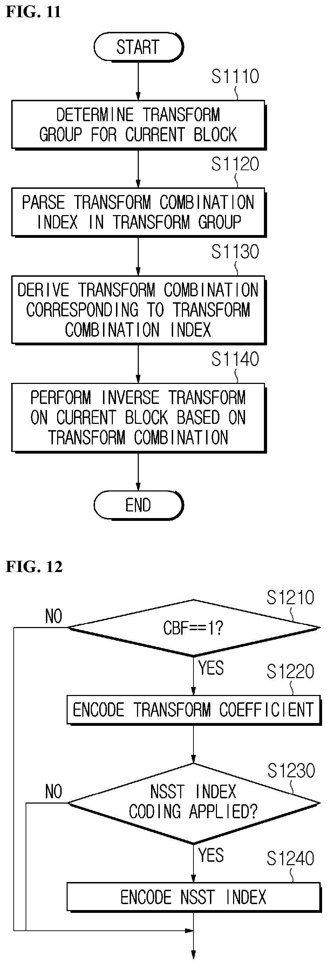

FIG. 11 is a flowchart illustrating a decoding process in which AMT is performed.

First, the decoding apparatus may determine a transform group for a current block (S1110).

The decoding apparatus may parse a transform combination index (S1120). Here, the transform combination index may correspond to one of a plurality of transform combinations in the transform group. The step S610 of determining the transform group and the step S1120 of parsing the transform combination index may be performed simultaneously.

The decoding apparatus may derive a transform combination corresponding to the transform combination index (S1130). Here, the transform combination may refer to the transform combination described above with reference to Table 9, but is not limited thereto. In other words, configuration using different transform combinations is also possible.

The decoding apparatus may perform inverse transform on the current block based on the transform combination (S1140). If the transform combination consists of row transform and column transform, the row transform may be applied first and then the column transform may be applied. However, this process is not limited to this and may be applied in reverse.

## Overview of secondary transform NSST index coding

For secondary transform/inverse transform, a mode-dependent non-separable secondary transform (MDNSST) may be applied. To maintain low complexity, MDNSST may be applied only to low-frequency coefficients after primary transform. If the width (W) and height (H) of the transform coefficient block are both greater than or equal to 8, 8x8 non-separable secondary transform is applied to the upper left 8x8 region of the transform coefficient block. In contrast, if the width or height is less than 8, a 4x4 non-separable secondary transform is applied, and the 4x4 non-separable secondary transform may performed on the upper left $\min(8, W) \times \min(8, H)$ of the transform coefficient block. Here, $\min(A, B)$ is a function that outputs the smaller value between A and B.

For both 4x4 and 8x8 block sizes, there can be a total of 35x3 non-separable secondary transforms. Here, 35 may mean the number of transform sets specified by the intra prediction mode, and 3 may mean the number of NSST candidates for each intra prediction mode. Mapping from the intra prediction mode to the transform set may be defined as shown in Table 10.

[Table 10]

| intra mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
|---|---|---|---|---|---|---|---|---|---|---|---|---|---|---|---|---|---|---|---|---|---|---|---|---|---|---|---|---|---|---|---|---|---|---|
| set | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
| intra mode | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 | 65 | 66 | 67 (LM) |
| set | 34 | 33 | 32 | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | NULL |

To indicate a transform kernel among the transform sets, an NSST index (NSST idx) may be coded. If NSST is not applied, an NSST index with a value of 0 may be signaled.

Secondary transform (e.g., MDNSST) is not applied to a block coded in a transform skip mode. If the MDNSST index is signaled for a CU and is not zero, MDNSST is not used for a block of a component coded in the transform skip mode within the CU. The overall coding structure including coefficient coding and NSST index coding is shown in FIGS. 11 and 12. A coded block flag (CBF) is encoded to determine whether coefficient coding or NSST coding is performed. In FIGS. 11 and 12, the CBF flag may represent a luma block cbf flag (cbf_luma flag) or a chroma block cbf flag (cbf_cb flag or cbf_cr flag). Transform coefficients are coded when the CBF flag is 1.

FIG. 12 is a flowchart illustrating an encoding process in which NSST is performed.

Referring to FIG. 12, the encoding apparatus checks whether a CBF flag is 1 (S1210). If the CBF flag is 0 ('NO' in S1210), the encoding apparatus does not perform transform coefficient encoding and NSST index encoding. In contrast, when the CBF flag is 1 ('YES' in S1210), the encoding apparatus performs encoding on the transform coefficient (S1220). Afterwards, the encoding apparatus determines whether to perform NSST index coding (S1230) and performs NSST index coding (S1240). If NSST index coding is not applied ('NO' in S1230), the encoding apparatus may terminate the transform procedure without applying NSST and perform subsequent steps (e.g., quantization).

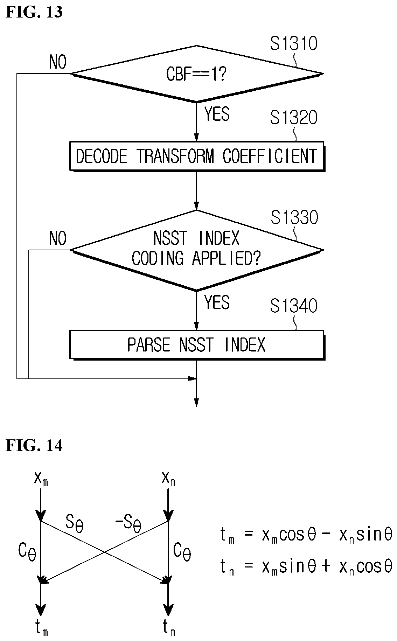

FIG. 13 is a flowchart illustrating a decoding process in which NSST is performed.

Referring to FIG. 13, the decoding apparatus checks whether a CBF flag is 1 (S1310). If the CBF flag is 0 ('NO' in S1310), the decoding apparatus does not perform transform coefficient decoding and NSST index decoding. In contrast, when the CBF flag is 1 ('YES' in S1310), the decoding apparatus performs decoding on the transform coefficient (S1320). Thereafter, the decoding apparatus determines whether to code the NSST index (S1330) and parses the NSST index (S1340).

NSST may not be applied to a block to which primary transform has been applied, for example, the entire TU, but only to the upper left 8x8 region or 4x4 region of the block. For example, if the block size is 8x8 or more, 8x8 NSST may be applied, and if the block size is less than 8x8, 4x4 NSST may be applied. In addition, when 8x8 NSST is applied, 4x4 NSST may be applied to each 4x4 block. Both 8x8 NSST and 4x4 NSST follow the transform set configuration described above. 8x8 NSST may have 64 input data and 64 output data, and 4x4 NSST may have 16 inputs and 16 outputs.

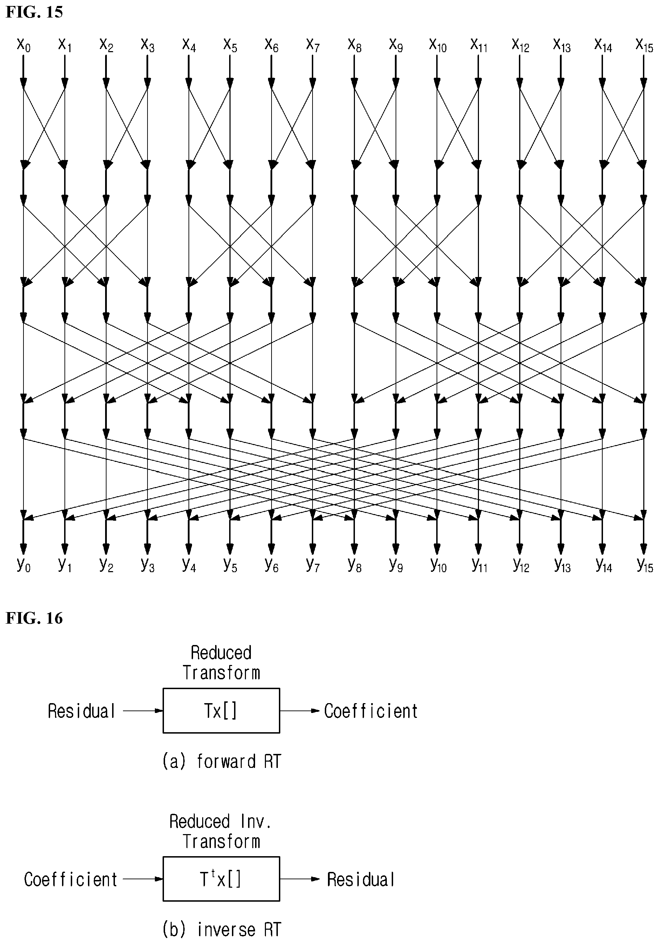

FIGS. 14 and 15 are views illustrating a method of performing NSST. FIG. 14 shows Givens rotation, and FIG. 15 shows a round configuration of 4x4 NSST consisting of a Givens rotation layer and permutations.

Both 8x8 NSST and 4x4 NSST may be composed of hierarchical combinations of Givens rotations. A matrix corresponding to one Givens rotation is as shown in Equation 1, and a matrix product is expressed in a diagram as shown in FIG. 14.

[Equation 1]

$$ R_\theta = \begin{bmatrix} \cos\theta & -\sin\theta \\ \sin\theta & \cos\theta \end{bmatrix} $$

As shown in FIG. 14, two output data $t_m$ and $t_n$ may be obtained by applying the matrix of Equation 1 to the two input data $x_m$ and $x_n$.

Since one Givens rotation is to rotate two data, 32 or 8 Givens rotations are needed to process 64 data (for 8x8 NSST) or 16 data (for 4x4 NSST), respectively. Therefore, a Givens rotation layer may be constructed by grouping 32 or 8 Givens rotations.

As shown in FIG. 15, output data for one Givens rotation layer may be forwarded as input data for a next Givens rotation layer through permutation (or shuffling). As shown in FIG. 15, the permutation pattern is defined regularly, and in the case of 4x4 NSST, four Givens rotation layers and the corresponding permutations form one round. 4x4 NSST is performed in 2 rounds, and 8x8 NSST is performed in 4 rounds. Different rounds use the same permutation pattern, but Givens rotation angles applied may be different. Therefore, it is necessary to store angle data for all Givens rotations that configure each transform.

As a final step, one permutation may be finally performed on the data output through the Givens rotation layers, and information about the permutation may be stored separately for each transform. In the case of forward NSST, the permutation may be performed last, and in the case of backward NSST, the inverse process of the permutation (i.e., inverse-direction permutation or inverse permutation) may be performed first.

In the case of backward NSST, the Givens rotation layers and permutations applied in forward NSST may be applied in inverse order, and a negative (-) value may be added to each Givens rotation angle.

## Overview of reduced secondary transform (RST)

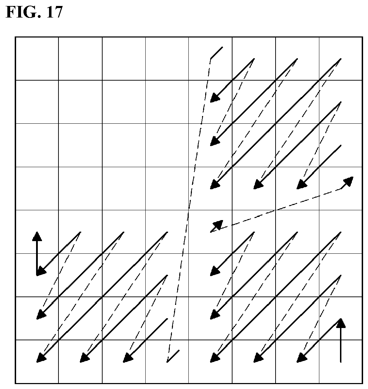

FIGS. 16 and 17 are views illustrating a method of performing RST.

Assuming that an orthogonal matrix representing one transform has the form of NxN, RT (reduced transform) leaves only Rout of N transform basis vectors (R < N). The matrix for forward RT that generates the transform coefficient may be defined as Equation 2.

[Equation 2]

$$T_{RxN} = \begin{bmatrix} t_{11} & t_{12} & t_{13} & \dots & t_{1N} \\ t_{21} & t_{22} & t_{23} & & t_{2N} \\ & & \vdots & \ddots & \vdots \\ t_{R1} & t_{R2} & t_{R3} & \cdots & t_{RN} \end{bmatrix}$$

Since the matrix for backward RT is the transpose matrix of the forward RT matrix, the application of forward RT and backward RT may be shown in (a) and (b) of FIG. 16.

The RT applied to the upper left 8x8 block of the transform coefficient block to which primary transform is applied may be referred to as 8x8 RST. When the value of R is set to 16 in Equation 2, the forward 8x8 RST has the form of a 16x64 matrix, and the backward 8x8 RST has the form of a 64x16 matrix. The transform set configuration shown in Table 10 may also be applied to 8x8 RST. That is, 8x8 RST may be determined according to the transform set in Table 10. Since one transform set consists of two or three transforms depending on the intra prediction mode, one of up to four transforms may be selected, including the case where the secondary transform is not applied (one transform may correspond to an identity matrix). Assuming that indices of 0, 1, 2, and 3 are assigned to each of the four transforms (for example, index 0 may be assigned to the identity matrix, i.e., the case where no secondary transform is applied), the applied transform may be specified by signaling a syntax element corresponding to the NSST index for each transform coefficient block. That is, for the 8x8 upper left block through the NSST index, 8x8 NSST may be specified in the case of NSST, and 8x8 RST may be specified in RST configuration.

When applying the forward 8x8 RST shown in Equation 2 above, since 16 valid transform coefficients are generated, it can be seen that the 64 input data constituting the 8x8 region are reduced to 16 output data, and from the perspective of a two-dimensional region, only 1/4 of the region is filled with valid transform coefficients. Accordingly, 16 output data obtained by applying forward 8x8 RST are filled in the upper left region of FIG. 12.

FIG. 17 shows a process of performing the reverse scan from the 64th to the 17th according to the reverse scan order.

In FIG. 17, the upper left 4x4 region becomes a ROI (region of interest) filled with valid transform coefficients, and the remaining region is left empty. The empty region may be filled with a default value of 0. If a non-zero valid transform coefficient is found in a region other than the ROI of FIG. 17, it is certain that 8x8 RST is not applied and thus NSST index coding may be skipped. Conversely, if a non-zero transform coefficient is not found in a region other than the ROI of FIG. 17 (i.e., the region other than the ROI is filled with 0), 8x8 RST is likely to be applied, and thus an NSST index may be coded. Since it is necessary to check the presence or absence of a non-zero transform coefficient, such conditional NSST index coding may be performed after the residual coding process.

In the present disclosure, NSST/RT/RST may be collectively referred to as LFNST, and the NSST index or (R)ST index may be collectively referred to as LFNST index. LFNST may be applied in a non-separable transform format based on a transform kernel (transform matrix or transform matrix kernel) for the low-frequency transform coefficients located in the upper left region of the transform coefficient block.

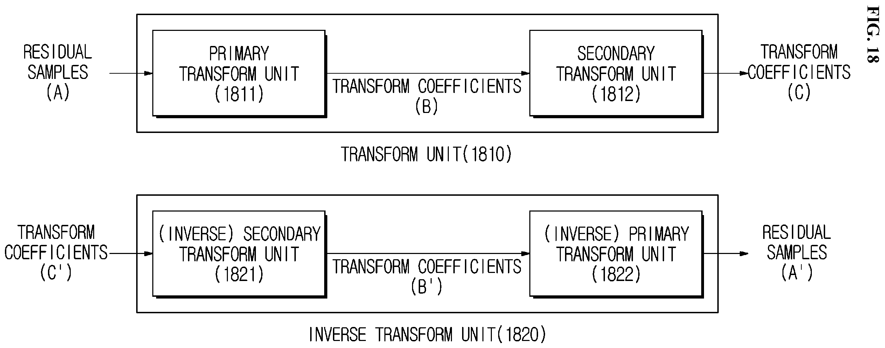

FIG. 18 is a view illustrating a transform and inverse transform process according to an embodiment of the present disclosure. In FIG. 18, a transform unit 1810 may correspond to the transform unit 120 of FIG. 2, and an inverse transform unit 1820 may correspond to the inverse transform unit 150 of FIG. 2 or the inverse transform unit 230 of FIG. 3.

Referring to FIG. 18, the transform unit 1810 may include a primary transform unit 1811 and a secondary transform unit 1812.

The primary transform unit 1811 may generate (primary) transform coefficients B by applying primary transform to residual samples A. In the present disclosure, the primary transform may be referred to as core transform.

The first transform may be performed based on the MTS scheme. When the existing MTS is applied, transform from the spatial domain to the frequency domain is applied to the residual signal (or residual block) based on DCT Type 2, DST Type 7, and DCT Type 8, and transform coefficients (or primary transform coefficients) may be generated. Here, DCT Type 2, DST Type 7, and DCT Type 8 may be referred to as a transform type, transform kernel, or transform core. Examples of basis functions for DCT Type 2, DST Type 7, and DCT Type 8 are as described above with reference to Table 4. However, this is an example and the embodiments of the present disclosure may be applied even when the configuration of the existing MTS kernel is different, that is, may be applied even when it includes a different type of DCT/DST or transform skip.

The existing MTS has a form that applies one kernel in the horizontal direction and applies one kernel in the vertical direction as separable transform. It is generally known that a non-separable transform kernel provides higher encoding/decoding efficiency than a separable transform kernel, but a non-separable transform method is not used in the conventional primary transform.

Accordingly, according to embodiments of the present disclosure, primary transform may be performed based on a non-separable transform kernel. In the present disclosure, primary transform based on a non-separable transform kernel may be referred to as non-separable primary transform or non-separable core transform.

The non-separable primary transform may replace at least one of the existing MTS candidates or may be added as a new MTS candidate. For example, only DCT Type 2 and non-separable primary transform may be used as MTS candidates, or non-separable primary transform may be used as a MTS candidate in addition to DCT Type 2, DST Type 7, and DCT Type 8.

As the non-separable primary transform is included in the MTS candidate, the MTS index (e.g., tu_mts_idx[x0][y0]) table in Table 2 described above may be modified, for example, as shown in Table 11 or Table 12.

[Table 11]

| tu_mts_idx[ x0 ][ y0 ] | 0 | 1 | 2 |
|---|---|---|---|
| trTypeHor | 0 | 1 | 2 |
| trTypeVer | 0 | 1 | 2 |

[Table 12]

| tu_mts_idx[ x0 ][ y0 ] | 0 | 1 | 2 | 3 | 4 | 5 |
|---|---|---|---|---|---|---|
| trTypeHor | 0 | 1 | 2 | 1 | 2 | 3 |
| trTypeVer | 0 | 1 | 1 | 2 | 2 | 3 |

In Tables 11 and 12, trTypeHor may represent a horizontal direction transform kernel, and trTypeVer may represent a vertical direction transform kernel. A trTypeHor/trTypeVer value of 0 may indicate DCT type 2, a trType-Hor/trTypeVer value of 1 may indicate DST type 7, and a trTypeHor/trTypeVer value of 2 may indicate DCT type 8. In addition, a trTypeHor/trTypeVer value of 3 may indicate non-separable primary transform. However, this is only an example, and the embodiments of the present disclosure are not limited thereto.

Since the non-separable primary transform has the property that the horizontal direction transform and the vertical direction transform are not separated, the transform kernel of the non-separable primary transform needs to be the same for the horizontal and vertical directions. Accordingly, according to an embodiment of the present disclosure, when trTypeHor has a value indicating non-separable primary transform, the trTypeVer value may also be constrained to have a value indicating non-separable primary transform. For example, in Table 12, if the trTypeHor value is 3, the trTypeVer value may not be between 0 and 2 and is only constrained to 3.

Meanwhile, in some embodiments, non-separable primary transform may be added as a separate option from the MTS scheme described above. For example, non-separable primary transform may not be included in the MTS candidate but may be used as an independent transform candidate. In this case, a predetermined first flag (e.g., nspt_flag) may be signaled to indicate whether non-separable primary transform is applied, and a second flag (e.g., mts_flag) indicating whether MTS is applied may be signaled only when a first flag is 0 (i.e., the case of indicating that non-separable primary transform is not applied).

Non-separable primary transform may be performed, for example, with a 4x4 block as input as follows. An example of a 4x4 input block X is as shown in Equation 3.

[Equation 3]

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

If the input block X is expressed in the form of a vector, it may be expressed as Equation 4.

[Equation 4]

$$\vec{X} = [X_{00}, X_{01}, X_{02}, X_{03}, X_{10}, X_{11}, X_{12}, X_{13}, X_{20}, X_{21}, X_{22}, X_{23}, X_{30}, X_{31}, X_{32}, X_{33}]^T$$

In this case, non-separable primary transform may be calculated as shown in Equation 5.

[Equation 5]

$$\vec{F} = T \cdot \vec{X}$$

Here, $\vec{F}$ represents a transform coefficient vector, T represents a 16×16 non-separable transform matrix, and an operator • means multiplication of the matrix and the vector.

A 16x1 transform coefficient vector $\vec{F}$ may be derived through Equation 5, and $\vec{F}$ may be reconstructed into a 4x4 block according to the scan order (e.g., horizontal, vertical, diagonal, or predetermined/stored scan order). However, this is only an example, and various optimized non-separable transform calculation methods may be used to reduce the computational complexity of the non-separable primary transform.

As such, according to the embodiments of the present disclosure, the primary transform unit 1811 may generate (primary) transform coefficients B by applying non-separable primary transform to the residual samples A.

The secondary transform unit 1812 may generate (secondary) transform coefficients C by applying secondary transform to the (primary) transform coefficients B. In one example, the LFNST described above may be applied as secondary transform. In addition, the (secondary) transform coefficients C may be encoded through quantization and entropy encoding processes and used to generate a bitstream.

Next, the inverse transform unit 1820 may include an (inverse) secondary transform unit 1821 and an (inverse) primary transform unit 1822.

The (inverse) secondary transform unit 1821 applies the (inverse) secondary transform to the dequantized (secondary) transform coefficients C' to generate (primary) (inverse) transform coefficients B'. Here, the (inverse) secondary transform may correspond to the inverse process of the secondary transform performed by the transform unit 1810.

The (inverse) primary transform unit 1822 may generate residual samples A' by applying (inverse) primary transform to the (primary) (inverse) transform coefficients B'.

According to embodiments of the present disclosure, the (inverse) primary transform may include non-separable primary inverse transform. The non-separable primary inverse transform may be included as an MTS candidate or provided as an independent inverse transform candidate. The non-separable primary inverse transform corresponds to the inverse process of the non-separable primary transform, and its specific details are as described above in relation to the non-separable primary transform.

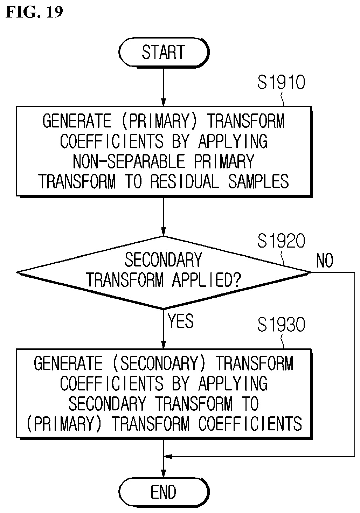

FIG. 19 is a flowchart illustrating a transform method according to an embodiment of the present disclosure.

The transform method of FIG. 19 may be performed by the image encoding apparatus of FIG. 2. For example, steps S1910 to S1930 may be performed by the transform unit 120.

Referring to FIG. 19, the image encoding apparatus may generate (primary) transform coefficients by applying non-separable primary transform to residual samples (S1910). All residual samples in the residual block may be modified by non-separable primary transform. In one embodiment, the non-separable primary transform may have a reduced transform (RT) form in which the number of output coefficients is smaller than the number of input samples. In this case, zeroing out may be performed on all regions in which output coefficients are not generated.

The image encoding apparatus may determine whether to apply secondary transform to the (primary) transform coefficients (S1920). The secondary transform may be non-separable secondary transform, such as NSST or RST. In one embodiment, the image encoding apparatus may determine whether to apply the secondary transform based on the primary-transformed residual transform coefficient. For example, when the number of non-zero residual transform coefficients included in the region to which the secondary transform is applied is greater than or equal to a predetermined threshold, the image encoding apparatus may determine that the secondary transform is applied. On the other hand, if the number of non-zero residual transform coefficients included in the region to which the secondary transform is applied is less than the predetermined threshold, the image encoding apparatus may determine that the secondary transform is not applied. Information regarding whether secondary transform is applied may be encoded as a predetermined syntax element (e.g., sps_lfnst_enabled_flag, lfnst_idx, etc.).

Upon determining that secondary transform is applied ('YES' in S1920), the image encoding apparatus may generate (secondary) transform coefficients by applying secondary transform to the (primary) transform coefficients (S1930). In this case, a bitstream may be generated based on (secondary) transform coefficients.

In contrast, upon determining that the secondary transform is not applied ('NO' in S1920), the image encoding apparatus may not perform secondary transform on the (primary) transform coefficients. In this case, a bitstream may be generated based on the (primary) transform coefficients.

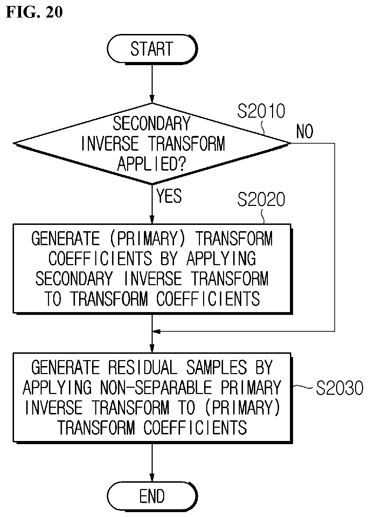

FIG. 20 is a flowchart illustrating an inverse transform method according to an embodiment of the present disclosure.

The inverse transform method of FIG. 20 may be performed by the image encoding apparatus of FIG. 2 or the image decoding apparatus of FIG. 3. For example, steps S2010 to S2030 may be performed by the inverse transform unit 150 of FIG. 2 or the inverse transform unit 230 of FIG. 3. Hereinafter, for convenience of description, the image decoding apparatus will be focused upon.

Referring to FIG. 20, the image decoding apparatus may determine whether to apply secondary inverse transform to the transform coefficients obtained from the bitstream (S2010). The secondary inverse transform may be non-separable secondary inverse transform, such as NSST or RST. In one embodiment, the image decoding apparatus may determine whether to apply secondary inverse transform based on a predetermined syntax element (e.g., sps_lfnst_enabled_flag, lfnst_idx, etc.) obtained from the bitstream. For example, when lfnst_idx has a first value (e.g., 0), the image decoding apparatus may determine that the secondary inverse transform is not applied. In contrast, when lfnst_idx has a value different from the first value (e.g., 0), the image decoding apparatus may determine that secondary inverse transform is applied.

Upon determining that the secondary inverse transform is applied ('YES' in S2010), the image decoding apparatus may generate (primary) transform coefficients by applying secondary inverse transform to the transform coefficients obtained from the bitstream (S2020). In this case, transform coefficients obtained from the bitstream may correspond to (secondary) transform coefficients.

On the other hand, upon determining that the secondary inverse transform is not applied ('NO' in S2010), the image decoding apparatus may not perform secondary inverse transform on the transform coefficients obtained from the bitstream. In this case, transform coefficients obtained from the bitstream may correspond to (primary) transform coefficients.

The image decoding apparatus may generate residual samples by applying non-separable primary inverse transform to the (primary) transform coefficients (S2030). All (primary) transform coefficients may be modified by non-separate primary inverse transform. In one embodiment, the non-separable primary inverse transform may have a reduced transform (RT) form in which the number of output coefficients is greater than the number of input coefficients.

**Subblock based non-separable primary transform**

In one embodiment, the block is split into subblocks without applying non-separable primary transform suitable for the width and height of the block to a relatively large input block and then non-separable primary transform may be applied using a non-separable transform matrix suitable for the width and height of each subblock. For example, when applying non-separable primary transform to a 4x8 block, the 4x8 block is horizontally split into two 4x4 subblocks in the spatial domain, and non-separable primary transform in 4x4 block units may be applied to each 4x4 subblock. Alternatively, when applying non-separable primary transform to a 16x8 block, the 16x8 block is vertically split into two 8x8 subblocks in the spatial domain, and non-separable primary transform in 8x8 block units may be applied to each 8x8 subblock.

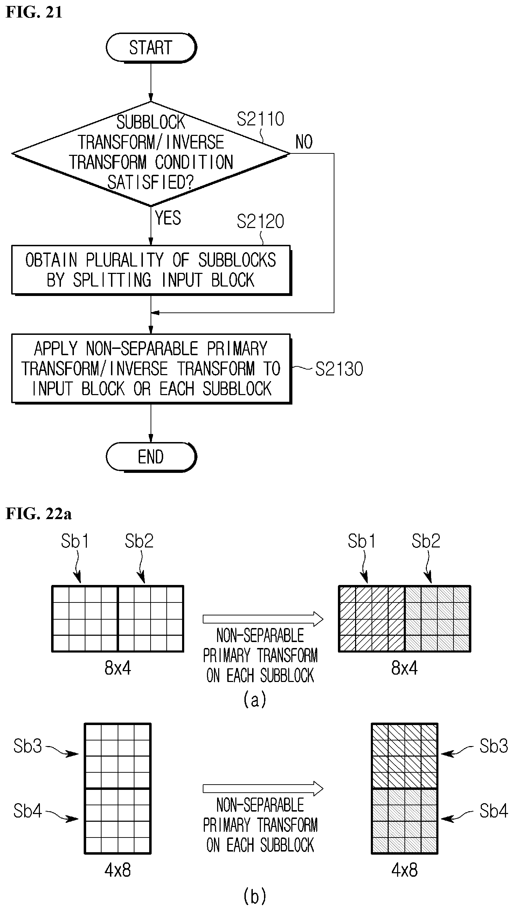

FIG. 21 is a flowchart illustrating a subblock non-separable primary transform/inverse transform according to an embodiment of the present disclosure.

The transform method of FIG. 21 may be performed by the image encoding apparatus of FIG. 2. For example, steps S2110 to S2130 may be performed by the transform unit 120. In addition, the inverse transform method of FIG. 21 may be performed by the image encoding apparatus of FIG. 2 or the image decoding apparatus of FIG. 3. For example, steps S2110 to S2130 may be performed by the inverse transform unit 150 of FIG. 2 or the inverse transform unit 230 of FIG. 3.

Referring to FIG. 21, the image encoding/decoding apparatus may determine whether a predetermined subblock transform/inverse transform condition is satisfied (S2110). In one embodiment, the image encoding/decoding apparatus may determine whether the subblock transform/inverse transform condition is satisfied based on a result of comparing the size of the input block with a predetermined threshold. Here, the threshold may include a first threshold of 4x4 size and a second threshold of 8x8 size. Specifically, when the size of the input block is greater than the first threshold and less than the second threshold, the image encoding/decoding apparatus may determine that the subblock transform/inverse transform condition is satisfied. In addition, when the size of the input block is greater than the second threshold, the image encoding/decoding apparatus may determine that the subblock transform/inverse transform condition is satisfied.

If the subblock transform condition is satisfied ('YES' of S2110), the image encoding/decoding apparatus may obtain a plurality of subblocks by splitting the input block (S2120). For example, the image encoding/decoding apparatus may obtain two 4x4 subblocks by vertically splitting an 8x4 block. Alternatively, the image encoding/decoding apparatus obtain two 8x8 subblocks by horizontally splitting an 8x16 block.

In contrast, if the subblock transform condition is not satisfied ('NO' of S2110), the image encoding/decoding apparatus may determine that the input block is not split and proceed to step S2130.

In addition, the image encoding/decoding apparatus may apply non-separable primary transform/inverse transform to the input block or each subblock (S2130). When applying non-separable primary transform/inverse transform to the entire input block, the non-separable transform matrix may be determined based on the width and height of the input block. In contrast, when applying non-separable primary transform/inverse transform to each subblock, the non-separable transform matrix may be determined based on the width and height of each subblock.

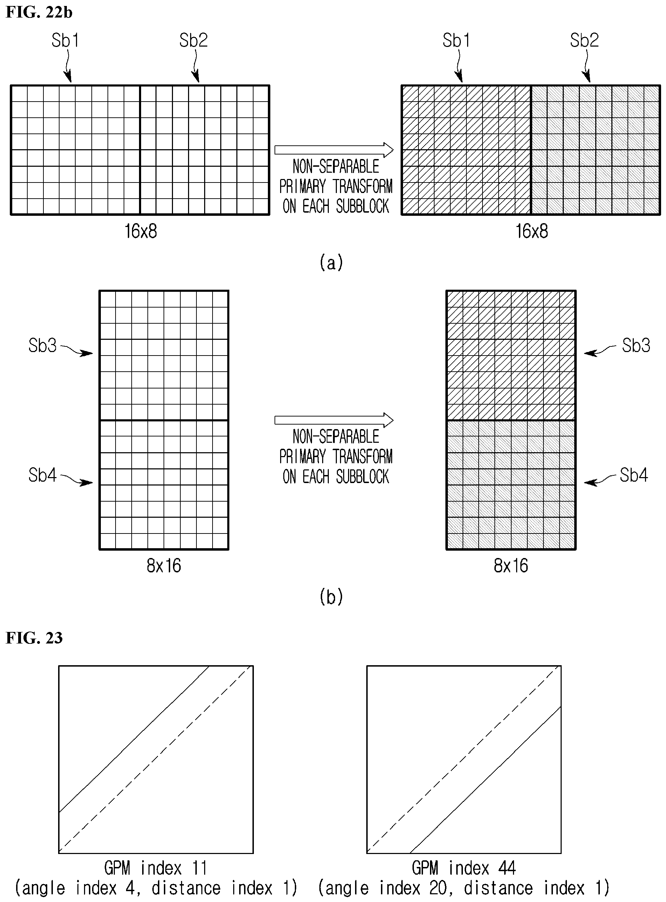

FIGS. 22a and 22b are views illustrating a subblock based non-separable primary transform process.

FIGS. 22a to 22b show non-separable primary transform at an encoder stage, that is, a forward non-separable primary transform process.

FIG. 22a shows a case where the size of an input block is 8x4 or 4x8, and FIG. 22b shows a case where the size of the input block is 16x8 or 8x16.

In FIGS. 22a to 22d, a region indicated by a thick line represents a region to which non-separable primary transform is applied.

First, referring to (a) of FIG. 22a, an 8x4 input block may be split into two 4x4 subblocks Sb1 and Sb2. In addition, 4x4 non-separable primary transform may be applied to each of the subblocks Sb1 and Sb2. Specifically, a 16x16 non-separable primary transform matrix may be applied to the first subblock Sb1 to generate 16 (primary) transform coefficients. In addition, a 16x16 non-separable primary transform matrix may be applied to the second subblock Sb2 to generate 16 (primary) transform coefficients.

Referring to (b) of FIG. 22a, a 4x8 input block may be split into two 4x4 subblocks Sb3 and Sb4. In addition, 4x4 non-separable primary transform may be applied to each of the subblocks Sb3 and Sb4. Specifically, a 16x16 non-separable primary transform matrix may be applied to the third subblock Sb3 to generate 16 (primary) transform coefficients. In addition, a 16x16 non-separable primary transform matrix may be applied to the fourth subblock Sb4 to generate 16 (primary) transform coefficients.

Next, referring to (a) of FIG. 22b, a 16x8 input block may be split into two 8x8 subblocks Sb1 and Sb2. In addition, 8x8 non-separable primary transform may be applied to each of subblock Sb1 and Sb2. Specifically, a 64x64 non-separable primary transform matrix may be applied to the first subblock Sb1 to generate 64 (primary) transform coefficients. In addition, a 64x64 non-separable primary transform matrix may be applied to the second subblock Sb2 to generate 64 (primary) transform coefficients.

Referring to (b) of FIG. 22b, an 8x16 input block may be split into two 8x8 subblocks Sb3 and Sb4. In addition, 8x8 non-separable primary transform may be applied to each of the subblock Sb3 and Sb4. Specifically, a 64x64 non-separable primary transform matrix may be applied to the third subblock Sb3 to generate 16 (primary) transform coefficients. In addition, a 64x64 non-separable primary transform matrix may be applied to the fourth subblock Sb4 to generate 16 (primary) transform coefficients.

Meanwhile, in some embodiments, a different non-separable primary transform matrix may be applied to each subblock. For example, in FIG. 22a, a 16x16 non-separable primary transform matrix may be applied to the first subblock Sb1, and a 16x8 non-separable primary transform matrix may be applied to the second subblock Sb2. In this case, a region where (primary) transform coefficients are not generated in the second subblock Sb2 may be filled with a zero value (i.e., zero out).

## Application of non-separable transform to CIIP(Combined Inter and Intra Prediction)

An embodiment according to the present disclosure may determine whether to apply non-separable primary transform to a block to which a CIIP mode is applied and/or determine a set of non-separate primary transform kernels. According to an embodiment of the present disclosure, when various transform kernels are present, a transform kernel set and/or a transform kernel for a current transform block may be selected based on the CIIP mode.

If a CIIP mode is applied to the current block, the existing DCT type 2, DST type 7, and DCT type 8 may be used. In the present embodiment, non-separable primary transform may be applied to a block to which the CIIP mode is applied. For example, when non-separable primary transform is applied to the block to which the CIIP mode is applied, only DCT type 2 and non-separable primary transform may be used. Alternatively, non-separable primary transform may be used in addition to the existing DCT type 2, DST type 7, and DCT type 8. Alternatively, one or more kernels of the existing DCT Type 2, DST Type 7, and DCT Type 8 may be replaced with non-separable primary transform. Additionally, it is possible to determine whether to apply non-separable primary transform to the block to which the CIIP mode is applied based on the size and/or shape conditions of the current block. More specifically, when the prediction mode of the current block is a CIIP mode, the primary transform method for the current block may be adaptively selected as in the following example.

- Always apply non-separable primary transform
- Determination based on information indicating whether non-separable primary transform is applied (e.g., 1 bit flag, e.g., ciip_nspt_mode)
- Determination based on the number of pixels in the current block (e.g., if the number of pixels in the current block is more than 16 but less than 1024, non-separable primary transform is always applied). In other cases, non-separate primary transform is not applied.
- Signaling information specifying whether to apply non-separable primary transform based on the number of pixels in the current block (e.g.., if the number of pixels in the current block is 16 or more but less than 1024, a primary transform method is determined based on information specifying whether to apply non-separable primary transform). In other cases, non-separable primary transform is not applied.

In the above example, conditions regarding block size and/or shape for determining whether to apply primary transform are not limited to the above-described example. For example, specific values regarding the number of pixels in the current block may change.

As described above, according to an embodiment of the present disclosure, non-separable primary transform may be performed on a block predicted in the CIIP mode. At this time, the transform kernel of the non-separable primary transform may be selected from a set of n transform kernels and k transform kernels in each set. At this time, n and k may be changed adaptively. For example, when various non-separable primary transform kernels exist, a transform kernel set and/or transform kernel for a current transform block may be selected based on information about a CIIP weight and/or CIIP intra predictor. Here, the information about the CIIP intra predictor may be information indicating a specific detailed mode for generating the CIIP intra predictor. The specific detailed mode may mean, for example, an existing planar mode, PDPC blending mode, a mode using a DIMD in a CIIP and/or a mode using a TIMD in a CIIP, which will be described later. Information about the CIIP intra predictor may be referred to as "CIIP intra mode" in the present disclosure.

Specifically, the CIIP mode is a mode in which prediction is performed through a weighted sum of a prediction value generated in a planar intra prediction mode and a prediction value generated in a merge inter prediction mode. Accordingly, a transform kernel set and/or transform kernel may be adaptively selected based on the generated predictor type and/or CIIP weight. More specifically, the transform kernel of the non-separable primary transform for the current block predicted in the CIIP mode may be selected or determined by at least one of the examples below.

- Use of a single transform kernel in a single transform kernel set. That is, a single non-separable primary transform kernel may be used.
- Selection/determination from multiple transform kernels in a single transform kernel set. Selection from multiple transform kernels may be performed adaptively or based on signaled kernel selection information.
- Selection/determination from a set of multiple transform kernels and a single transform kernel in the set. At this time, the set of multiple transform kernels may be selected based on the weight value of the CIIP, as shown in the examples of Table 13 and/or Table 14.
- Selection/determination from a set of multiple transform kernels and multiple transform kernels in the set. At this time, the set of multiple transform kernels may be selected based on the weight value of CIIP, as shown in the examples of Table 13 and/or Table 14. Additionally, selection from multiple transform kernels in the set may be performed adaptively or based on signaled kernel selection information.

[Table 13]

| CIIP weight | TrSetIdx |
|-------------|----------|
| 1 | 0 |
| 2 | 1 |

(continued)

| CIIP weight | TrSetIdx |
|---|---|
| 3 | 2 |

[Table 14]

| CIIP weight | TrSetIdx |
|---|---|
| 1 | 0 |
| 2 | 1 |
| 3 | 1 |

Table 13 is an example of a method of selecting a non-separable primary transform kernel set (TrSetIdx, n=3) based on the CIIP weight. Additionally, Table 14 is an example of a method of selecting a non-separable primary transform kernel set (TrSetIdx, n=2) based on the CIIP weight.

As described above, a PDPC blending mode obtained by combining the CIIP mode with the PDPC may be applied. In this case, selection of the transform kernel set and/or the transform kernel to be applied to the non-separable primary transform of the current block may be selected/determined based on the type and/or CIIP weight value of the generated predictor. At this time, the type of predictor may mean whether it is a predictor obtained based on the existing CIIP mode (Normal) or a predictor obtained based on the PDPC blending mode. According to another embodiment of the present disclosure, when the PDPC blending mode is available, the primary transform method for the CIIP-predicted current block may be adaptively selected as in the following example. In the present disclosure, it may be referred to as Normal mode as one of the CIIP intra modes in which the existing planner mode is applied during CIIP intra prediction. Additionally, the case where PDPC is applied during intra prediction of CIIP may be referred to as a PDPC blending mode or CIIP_PDPC mode as one of CIIP intra modes.

- Use of a single transform kernel in a single transform kernel set. That is, a single non-separable primary transform kernel may be used.
- Selection/determination from multiple transform kernels in a single transform kernel set. Selection from multiple transform kernels may be performed adaptively or based on signaled kernel selection information.
- Selection/determination from a set of multiple transform kernels and a single transform kernel in the set. At this time, the set of multiple transform kernels may be selected based on the weight value and CIIP intra mode of the CIIP, as shown in the examples of Table 15 and/or Table 16.
- Selection/determination from a set of multiple transform kernels and multiple transform kernels in the set. At this time, the set of multiple transform kernels may be selected based on the weight value and CIIP intra mode of the CIIP, as shown in the examples of Table 15 and/or Table 16. Selection from multiple transform kernels in the set may be performed adaptively or based on signaled kernel selection information.

[Table 15]

| CIIP intra mode | TrSetIdx |
|---|---|
| Normal | 0 |
| PDPC blending | 1 |

[Table 16]

| CIIP intra mode | CIIP weight | TrSetIdx |
|---|---|---|
| Normal | 1 | 0 |
| Normal | 2 | 1 |
| Normal | 3 | 2 |
| PDPC blending | 1 | 3 |

(continued)

| CIIP intra mode | CIIP weight | TrSetIdx |
|---|---|---|
| PDPC blending | 2 | 4 |
| PDPC blending | 3 | 5 |

Table 15 is an example of a method of selecting a non-separable primary transform kernel set (TrSetIdx, n=2) based on a CIIP intra mode. Additionally, Table 16 is an example of a method of selecting a non-separable primary transform kernel set (TrSetIdx, n=6) based on a CIIP intra mode and CIIP weight.

As described above, when using the CIIP intra mode and CIIP weight, the CIIP intra mode and CIIP weight are grouped into n sets, and k transform kernels may be included in each set. In the present disclosure, the number of CIIP intra modes and CIIP weights and their grouping method are not limited to the above-described examples. For example, if determined based on the width and/or height of the input block, the number of sets and the number of transform kernels in the set may vary depending on the width and/or height of the block.

Hereinafter, various embodiments of applying non-separable primary transform when DIMD (Decoder side mode derivation) or TIMD (Template-based intra mode derivation) is used during intra prediction of the CIIP will be described. In the present disclosure, the case where DIMD is used during intra prediction of the CIIP may be referred to as a CIIP_DIMD mode as one of CIIP intra modes. Additionally, the case where TIMD is used during intra prediction of the CIIP may be referred to as a CIIP_TIMD mode as one of CIIP intra modes.

An intra prediction signal of CIIP may be generated through a PDPC weight-based prediction mode and/or DIMD/TIMD in addition to the planar intra prediction mode described above. According to the present disclosure, a transform kernel set and/or a transform kernel may be adaptively selected based on the generated predictor type. More specifically, when a PDPC blending mode and/or TIMD/DIMD are available, the primary transform method for the CIIP predicted current block may be adaptively selected as in the following example.

- Use of a single transform kernel in a single transform kernel set. That is, a single non-separable primary transform kernel may be used.
- Selection/determination from multiple transform kernels in a single transform kernel set. Selection from multiple transform kernels may be performed adaptively or based on signaled kernel selection information.
- Selection/determination from a set of multiple transform kernels and a single transform kernel in the set. At this time, the set of multiple transform kernels may be selected based on the CIIP intra mode, as shown in the examples of Table 17.
- Selection/determination from a set of multiple transform kernels and multiple transform kernels in the set. At this time, the set of multiple transform kernels may be selected based on the CIIP intra mode, as shown in the examples of Table 17. Selection from multiple transform kernels in the set may be performed adaptively or based on signaled kernel selection information.

[Table 17]

| CIIP intra mode | TrSetIdx |
|---|---|
| Normal | 0 |
| PDPC blending | 1 |
| CIIP with DIMD | 2 |
| CIIP with TIMD | 3 |

Table 17 illustrates a method of selecting a non-separable primary transform kernel set (TrSetIdx, n=4) based on a CIIP intra mode.

As described above, when using the CIIP intra mode and CIIP weight, the CIIP intra mode and CIIP weight are grouped into n sets, and k transform kernels may be included in each set. In the present disclosure, the number of CIIP intra modes and CIIP weights and their grouping method are not limited to the above-described examples. For example, if determined based on the width and/or height of the input block, the number of sets and the number of transform kernels in the set may vary depending on the width and/or height of the block.

**Application of non-separable primary transform to GPM (Geometric Partitioning Mode)**

Hereinafter, various embodiments of applying non-separable primary transform to a block predicted in a GPM will be described.

An embodiment according to the present disclosure may determine whether to apply non-separable primary transform to a block to which GPM (geometric partitioning mode) is applied and/or determine a set of non-separate primary transform kernels. According to an embodiment of the present disclosure, when various transform kernels exist, a transform kernel set and/or transform kernel for the current transform block may be selected based on the GPM.

If a GPM is applied to the current block, the existing DCT Type 2, DST Type 7, and DCT Type 8 may be used. In the present embodiment, non-separable primary transform may be applied to a block to which the GPM is applied. For example, when applying non-separable primary transform to the block to which the GPM is applied, only DCT type 2 and non-separable primary transform may be used. Alternatively, non-separable primary transform may be used in addition to the existing DCT type 2, DST type 7, and DCT type 8. Alternatively, one or more kernels of the existing DCT Type 2, DST Type 7, and DCT Type 8 may be replaced with non-separable primary transform. Additionally, it is possible to determine whether to apply non-separable primary transform to the block to which the GPM is applied based on the size and/or shape conditions of the current block. More specifically, when the prediction mode of the current block is a GPM, the primary transform method for the current block may be adaptively selected as in the following example.

- Always apply non-separable primary transform
- Determination based on information indicating whether non-separable primary transform is applied (e.g., 1 bit flag, e.g., gpm_nspt_mode)
- Determination based on the number of pixels in the current block (e.g., if the number of pixels in the current block is more than 16 but less than 1024, non-separable primary transform is always applied). In other cases, non-separate primary transform is not applied.

**[0277]** - Signaling information specifying whether to apply non-separable primary transform based on the number of pixels in the current block (e.g., if the number of pixels in the current block is 16 or more but less than 1024, a primary transform method is determined based on information specifying whether to apply non-separable primary transform). In other cases, non-separable primary transform is not applied.

In the above example, conditions regarding block size and/or shape for determining whether to apply primary transform are not limited to the above-described example. For example, specific values regarding the number of pixels in the current block may change.

As described above, according to an embodiment of the present disclosure, non-separable primary transform may be performed on a block predicted in the GPM. At this time, the transform kernel of the non-separable primary transform may be selected from a set of n transform kernels and k transform kernels in each set. At this time, n and k may be changed adaptively. For example, GPM may perform prediction by generating 64 block partitions as shown in Table 18 based on various angle indices and distance indices.

[Table 18]

| GPM index | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Angle index | 0 | 0 | 2 | 2 | 2 | 2 | 3 | 3 | 3 | 3 | 4 | 4 | 4 | 4 | 5 | 5 |
| Distance index | 1 | 3 | 0 | 1 | 2 | 3 | 0 | 1 | 2 | 3 | 0 | 1 | 2 | 3 | 0 | 1 |
| GPM index | 16 | 17 | 18 | 19 | 20 | 21 | 22 | 23 | 24 | 25 | 26 | 27 | 28 | 29 | 30 | 31 |
| Angle index | 5 | 5 | 8 | 8 | 11 | 11 | 11 | 11 | 12 | 12 | 12 | 12 | 13 | 13 | 13 | 13 |
| Distance index | 2 | 3 | 1 | 3 | 0 | 1 | 2 | 3 | 0 | 1 | 2 | 3 | 0 | 1 | 2 | 3 |
| GPM index | 32 | 33 | 34 | 35 | 36 | 37 | 38 | 39 | 40 | 41 | 42 | 43 | 44 | 45 | 46 | 47 |
| Angle index | 14 | 14 | 14 | 14 | 16 | 16 | 18 | 18 | 18 | 19 | 19 | 19 | 20 | 20 | 20 | 21 |
| Distance index | 0 | 1 | 2 | 3 | 1 | 3 | 1 | 2 | 3 | 1 | 2 | 3 | 1 | 2 | 3 | 1 |
| GPM index | 48 | 49 | 50 | 51 | 52 | 53 | 54 | 55 | 56 | 57 | 58 | 59 | 60 | 61 | 62 | 63 |
| Angle index | 21 | 21 | 24 | 24 | 27 | 27 | 27 | 28 | 28 | 28 | 29 | 29 | 29 | 30 | 30 | 30 |
| Distance index | 2 | 3 | 1 | 3 | 1 | 2 | 3 | 1 | 2 | 3 | 1 | 2 | 3 | 1 | 2 | 3 |

Table 18 shows 64 GPM block partition indices.

Therefore, the transform kernel set and transform kernel may be adaptively selected based on the generated block partition shape. More specifically, the transform kernel of the non-separable primary transform for the current block to which the GPM is applied may be selected or determined by at least one of the examples below.

- Use of a single transform kernel in a single transform kernel set. That is, a single non-separable primary transform kernel may be used.
- Selection/determination from multiple transform kernels in a single transform kernel set. Selection from multiple transform kernels may be performed adaptively or based on signaled kernel selection information.
- Selection/determination from a set of multiple transform kernels and a single transform kernel in the set. At this time, the set of multiple transform kernels may be selected based on the GPM index, angle index and/or distance index, as shown in the examples of Table 19, Table 20 and/or Table 21.
- Selection/determination from a set of multiple transform kernels and multiple transform kernels in the set. At this time, the set of multiple transform kernels may be selected based on GPM index, angle index or distance index, as shown in the examples of Table 19, Table 20 and/or Table 21. Additionally, selection from multiple transform kernels in the set may be performed adaptively or based on signaled kernel selection information.

[Table 19]

| GPM index | TrSetIdx |
|---|---|
| GPM index <= 17 | 0 |
| 17 < GPM index <= 35 | 1 |
| 35 < GPM index <= 49 | 2 |
| 49 < GPM index <= 63 | 3 |

[Table 20]

| Angle index | TrSetIdx |
|---|---|
| 0,16 | 0 |
| 2,18 | 1 |
| 3,19 | 2 |
| 4,20 | 3 |
| 5,21 | 4 |
| 8,24 | 5 |

[Table 21]

| Distance index | TrSetIdx |
|---|---|
| 0 | 0 |
| 1 | 1 |
| 2 | 2 |
| 3 | 3 |

Table 19 illustrates a method of selecting a non-separable primary transform kernel set (TrSetIdx, n=4) based on the GPM index. Table 20 illustrates a method of selecting a non-separable primary transform kernel set (TrSetIdx, n=10) based on the angle index. Table 21 illustrates a method of selecting a non-separable primary transform kernel set (TrSetIdx, n=4) based on the distance index.

As described above, GPM shapes are grouped into n sets, and k transform kernels may be included in each set. In the present disclosure, the number of GPM shapes and the grouping method are not limited to the above-described examples. For example, if determined based on the width and/or height of the input block, the number of sets and/or the number of transform kernels in the set may vary depending on the width and/or height of the block.

In another embodiment of the present disclosure, a method of transposing and using the same transform kernel set for symmetrical block split is proposed. Referring to FIG. 23, when performing block split using the GPM, there may be a case where there are two different GPM indices and a symmetrical split. Therefore, the present invention proposes a method of transposing input data and using the same primary transform kernel set for the symmetrical GPM index in configuring the non-separable primary transform kernel set. For example, the primary transform kernel set used for GPM index 11 may be equally used for GPM index 44 (with the input data transposed). Transposing the input data means that rows become columns and columns become rows for two-dimensional block data MxN, forming NxM data.

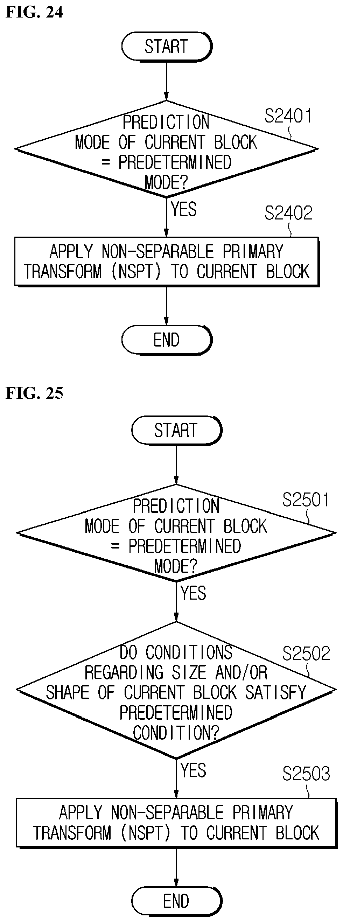

FIG. 24 is a flowchart showing an example of a primary transform method for a block to which a predetermined mode is applied according to the present disclosure. The method of FIG. 24 may be performed in an image encoding apparatus and/or an image decoding apparatus to transform and/or inversely transform a residual block of the current block.

Referring to FIG. 24, it may be determined whether the prediction mode of the current block is a predetermined mode (S2401). Here, the predetermined mode may be a CIIP mode or GPM, as described above. However, the predetermined mode is not limited to this. Upon determining that the prediction mode of the current block is a predetermined mode in step S2401 (Yes in S2401), non-separable primary transform (NSPT) may be applied to the current block (S2402). Upon determining that the prediction mode of the current block is not a predetermined mode in step S2401, non-separable primary transform (NSPT) may not be applied to the current block. In this case, transform according to a method other than the non-separable primary transform according to the present disclosure (e.g., conventional separable transform) may be performed on the current block, or primary transform may be omitted.

In various embodiments of the present disclosure described below, upon determining that the non-separable primary transform is not applied to the current block, it is obvious to those skilled in the art that transform according to a method other than the non-separable primary transform (e.g., conventional separable transform) may be performed on the current block or primary transform may be omitted, even if there is no separate description. According to the example shown in FIG. 24, since whether to apply the non-separable primary transform is determined depending on the prediction mode of the current block, the encoding apparatus does not need to separately transmit a flag regarding whether to apply non-separable primary transform.

According to another embodiment of the present disclosure, when the prediction mode of the current block is a predetermined mode, a flag (e.g., 1 bit flag, e.g., ciip_nspt_mode, gpm_nspt_mode) specifying whether to apply non-separable primary transform may be transmitted from the encoding apparatus to the decoding apparatus. For example, when the prediction mode of the current block is a predetermined mode (CIIP mode or GPM), the image encoding apparatus may determine whether to apply non-separable primary transform to transform the current block, and encode the flag information regarding this into a bitstream. When the prediction mode of the current block is a predetermined mode (CIIP mode or GPM), the image decoding apparatus may parse (decode) the flag information from the bitstream and determine whether to apply non-separable primary transform to transform the current block based on the flag information.

According to another embodiment of the present disclosure, when the prediction mode of the current block is a predetermined mode (CIIP mode or GPM), the image encoding apparatus and/or image decoding apparatus may determine whether to apply non-separable primary transform to the current block based on the size and/or shape conditions of the current block.

FIG. 25 shows a flowchart illustrating a method of applying non-separable primary transform according to a block size in a predetermined mode. The method of FIG. 25 may be performed in an image encoding apparatus and/or an image decoding apparatus to transform and/or inversely transform a residual block of a current block.

Referring to FIG. 25, it may be determined whether the prediction mode of the current block is a predetermined mode (S2501). Here, the predetermined mode may be a CIIP mode or GPM, as described above. However, the predetermined mode is not limited to this. Upon determining that the prediction mode of the current block is a predetermined mode in step S2501 (Yes in S2501), it may be determined whether the conditions regarding the size and/or shape of the current block satisfy a predetermined condition (S2502). The predetermined condition may, for example, relate to whether the number of pixels in the current block is in a predetermined range, is less than or equal to (less than) a predetermined threshold, or is more than (exceeds) a predetermined threshold. For example, the predetermined condition may be whether the number of pixels in the current block is 16 or more but less than 1024. However, the predetermined condition is not limited to the above-described examples. For example, specific values regarding the number of pixels in the current block may change. If the condition regarding the size and/or shape of the current block satisfies a predetermined condition in step S2502 ('YES' in S2502), non-separable primary transform (NSPT) may be applied to the current block (S2503). According to the example shown in FIG. 25, whether to apply non-separable primary transform is determined depending on whether the predetermined condition is satisfied, and thus the encoding apparatus does not need to separately transmit a flag regarding whether to apply non-separable primary transform.

According to another embodiment of the present disclosure, when the conditions regarding the size and/or shape of the current block satisfy the predetermined condition, a flag specifying whether to apply non-separable primary transform (e.g., 1 bit flag, e.g., ciip_nspt_mode, gpm_nspt_mode) may be transmitted from the encoding apparatus to the decoding apparatus. For example, when the prediction mode of the current block is a predetermined mode (CIIP mode or GPM), and the condition regarding the size and/or shape of the current block is a predetermined condition (e.g., the number of pixels in the current block is 16 or more but less than 1024), the image encoding apparatus may determine whether to apply non-separable primary transform to transform the current block, and encode the flag information regarding this into a bitstream. When the prediction mode of the current block is a predetermined mode (CIIP mode or GPM), and the conditions regarding the size and/or shape of the current block satisfy the predetermined condition (e.g., the number of pixels in the current block is 16 or more but less than 1024), the image decoding apparatus may parse (decode) the flag information from the bitstream, and determine whether to apply non-separable primary transform to transform the current block based on the flag information.

**Transform index signaling method in non-separable primary transform**

Hereinafter, various embodiments of a signaling method related to non-separable primary transform according to the present disclosure will be described.

In one embodiment according to the present disclosure, when applying primary transform, both separable transform and non-separable transform may be included. That is, when applying transform from the spatial domain to the frequency domain, both separable and non-separable transforms may be applied. Primary transform methods based on separable transform may include DCT Type 2, DST Type 7, DCT Type 8, DCT Type 5, DST Type 4, DST Type 1, IDT (identity transform), or other transforms that are not based on non-separable transform (e.g., transform skip). In the case of separable transform, there are multiple selectable transforms, and in the case of a non-separable transform, computational complexity or memory requirements may be greater than that of a separable transform. Thus, the number of selectable non-separable transforms may be one or more.

According to an embodiment of the present disclosure, various signaling methods (hereinafter referred to as first method) in the case where there is one kernel of non-separable transform and there are multiple separable transforms will be described below.

(a) According to one example, the non-separable transform may be set to transform index '0', and the index of the separable transform may start from 1. For example, if there are five separable transform methods, transform index 0 may indicate non-separable transform, and transform indices 1 to 5 may indicate predefined separable transform methods. Therefore, the transform index value from 0 to 5 may be signaled from the encoding apparatus to the decoding apparatus, and through the decoded index value, it is possible to know whether non-separable transform or separable transform is used and to determine which separable transform was used.

(b) As another example, the non-separable transform index is set to a predefined 'N', and the separable transform indices may be defined in order, excluding N, starting from 0 and up to the predefined maximum index value M (where M >= N). For example, if there are 5 available separable transform methods and the index of the non-separable transform is defined as 3 (e.g., N=3), the index of the separable transform is assigned in a predetermined order from 0 to 5, but may be determined except for '3'. In this case, possible index values from 0 to 5 may be signaled from the encoding apparatus to the decoding apparatus, and through the decoded index value, it is possible to know whether non-separable transform or separable transform is used, and in the case of separable transform, which separable transform was used may be determined.

(c) In another embodiment, the encoding apparatus may first signal whether to use non-separable transform through a flag indicating whether to use non-separable transform. If the flag indicating whether to use non-separable transform is 0, the index of the separable transform may be additionally signaled. The value of the flag indicating whether to use non-separable transform may be coded by predicting the probability through a context coded bin. At this time, the context model for probability prediction may be constructed using the size of the block, the shape of the block, the intra prediction mode, or information on previously coded blocks.

(d) The above-described transform index value (or separable transform index value) may be binarized through FLC (fixed length code) or TBC (truncated binary code), in which case it may be coded through context coding (i.e., coding by treating it as a context coded bin) or bypass coding (i.e., coding by treating it as a bypass coded bin). Alternatively, a transform index is expressed through truncated unary (TU) binarization and may be coded by predicting the probability of occurrence through context coding (i.e., coding by treating it as a context coded bin), or may be coded with the same probability through bypass coding (i.e., coding by treating it as a bypass coded bin).

According to another embodiment of the present disclosure, various signaling methods (hereinafter referred to as second method) when there are two or more non-separable transform kernels and there are multiple separable transforms will be described below.

(a) According to one example, the encoding apparatus may first signal whether to use non-separable transform through a flag indicating whether to use non-separable transform. If the flag indicating whether to use non-separable transform is 1, a non-separable transform kernel index may be additionally signaled, and if the flag indicating whether to use non-separable transform is 0, a separable transform index may be additionally signaled. At this time, the non-separable transform kernel index value or separable transform index value may be binarized through FLC (fixed length code) or TBC (truncated binary code), and in this case, may be coded through context coding or bypass coding. Alternatively, the non-separable transform kernel index value or separable transform index value may be expressed through truncated unary (TU) binarization and may be coded by predicting the probability of occurrence through context coding or may be coded with the same probability through bypass coding. Additionally, the flag indicating whether to use non-separable transform may be coded by predicting the probability through a context coded bin. At this time, the context model for probability prediction may use the size of the block, the shape of the block, the intra prediction mode, or information on previously coded blocks.

(b) As another example, the encoding apparatus may signal the transform index at once without separately signaling the flag indicating whether to use non-separable transform. If there are N non-separable transform kernels and M available separable transforms, the transform index values from 0 to N-1 may indicate N non-separable transform kernels (0 to N-1), and the transform index values from N to N+M-1 may indicate separable transform indices 0 to (M-1). The method of mapping the separable transform index available from the transform index and the non-separable transform kernel may be applied in various predefined forms in addition to the cases described above.

When defining a separable transform index according to the above-described embodiments, the encoding apparatus may determine transform to be applied to the horizontal and vertical directions through the given separable transform index value according to a predetermined rule. Alternatively, the separable transform index may be separably divided into a horizontal separable transform index and a vertical separable transform index and transmitted, and the transform specified by each index may be applied to the corresponding direction.

**Non-separable primary transform method using residual characteristics**

Hereinafter, various embodiments according to the present disclosure that perform non-separable primary transform using the characteristics of the residual signal will be described.

According to an embodiment of the present disclosure, when applying non-separable primary transform to a block to which a CIIP mode is applied and applying non-separable primary transform to a block to which a GPM is applied, the encoding apparatus may adaptively apply non-separable primary transform using the characteristics of the residual of the current block or neighboring block. For a block with low residual signal energy, that is, a block with a small number of residual coefficients, it is more efficient to use one non-separable transform kernel than to use multiple non-separable transform kernels. In this case, the encoding apparatus can achieve more efficient compression performance by reducing bit consumption for signaling non-separable transform kernels. On the other hand, a block with high residual signal energy, that is, a block with a large number of residual coefficients, may have various characteristics, so it is efficient to use multiple non-separable transform kernels even if additional signaling is performed. Additionally, in the case of non-separable transform, since computational complexity or memory requirements are greater than that of separable transform, the encoding apparatus can reduce computational complexity (reduce power consumption) through the method proposed in the present disclosure.

According to an embodiment of the present disclosure, the encoding apparatus may use the position of the last effective coefficient (last non-zero coefficient) of the current block or neighboring blocks to adaptively apply non-separable primary transform to a block to which a CIIP mode is applied and/or to a block to which a GPM is applied. The position of the last significant coefficient in a block may be an important clue to determine the residual characteristics of the block. In general, the closer the position of the last significant coefficient in a block is to the top-left pixel of the block, the more consistent the distribution of pixel values is in the spatial domain, and the farther the position of the last significant coefficient in a block is from the top-left pixel of the block, the higher the variance of the pixel value in the spatial domain. In particular, since the CIIP mode and GPM are inter predictions and the value of the high frequency coefficient in the block is small, this may be used to efficiently determine whether to apply non-separable primary transform to the block to which the CIIP mode is applied and/or the blocks to which the GPM is applied. When lastScanPos is defined as one-dimensional position information that identifies the last significant coefficient position in a block, lastScanPos is set to 0 at the top-left pixel position, and lastScanPos may have a larger value as it moves toward the bottom-right pixel of the block. In the decoding apparatus, the lastScanPos value may be derived based on a syntax value signaling the position information of the last significant coefficient (e.g., last_sig_coeff_x_prefix, last_sig_coeff_y_prefix, last_sig_coeff_x_suffix, last_sig_coeff_y_suffix), or may be assigned in a predetermined scanning order of coefficients or in the reverse order of the scanning order of coefficients depending on the block size.

According to an embodiment of the present disclosure, the encoding apparatus may change the number of non-separable transform kernels by dividing the range using lastScanPos information of the current block or neighboring block. For example, when using two ranges, the encoding apparatus may use one non-separable transform kernel when the value of lastScanPos of the current block or the neighboring block is less than or equal to a first threshold (the position of the last significant coefficient is close to the top-left pixel of the block) and, otherwise, use multiple non-separable transform kernels. As another example, if the value of lastScanPos of the current block or neighboring block is less than or equal to the first threshold, non-separable transform is not applied and only the separable transform (e.g., DCT-2) is applied, and, otherwise, one or multiple non-separable transform kernels may be used. As another example, the encoding apparatus may use only non-separable transform or may use both separable transform and non-separable transform when the value of lastScanPos of the current block or neighboring block is greater than or equal to the first threshold. As another example, when using three ranges, the encoding apparatus may use one non-separable transform kernel if the value of lastScanPos of the current block or neighboring block is less than or equal to a second threshold, use M non-separable transform kernels when the value of lastScanPos is greater than the second threshold and less than or equal to a third threshold, and use N non-separable transform kernels if the value of lastScanPos is greater than the third threshold. At this time, if the significant coefficient in the current block exists only in the top-left pixel, that is, at the DC position, the above method is not applied, and separable transform (e.g., DCT-2) or a separately determined transform method may be applied.

In the present embodiment, the first threshold, the second threshold, the third threshold, and the number of threshold ranges may be experimentally determined values, and may be adaptively changed and applied according to the size of the current block.

As described above, it may be determined whether to perform non-separable primary transform on the current block based on lastScanPos. The present embodiment may be combined with other embodiments of the present disclosure. For example, a determination process based on lastScanPos may be added to the embodiment of FIG. 24 or the embodiment of FIG. 25. Alternatively, the determination process (S2401, S2501, or S2502) in the embodiment of FIG. 24 or FIG. 25 may be partially replaced.

According to another embodiment of the present disclosure, the encoding apparatus may adaptively apply non-separable primary transform to a block to which a CIIP mode is applied and/or a block to which a GPM is applied using the number of non-zero coefficients of the current block or neighboring block. The number of last significant coefficients in a block may be an important clue to determine the residual characteristics of the block. In general, the smaller the number of non-zero coefficients in a block, the more consistent the distribution of pixel values in the spatial domain, and the higher the number of non-zero coefficients in the block, the higher the variance of pixel values in the spatial domain. In particular, since the CIIP mode and GPM are inter predictions and most coefficients in the block are 0, the encoding apparatus uses this to efficiently determine whether non-separable primary transform is applied to the block to which the CIIP mode is applied and/or to the block to which the GPM is applied. When defining numSigCoeff as the number of significant coefficients in the block, the numSigCoeff value may be derived based on a syntax value (e.g., sig_coeff_flag or/and sb_coded_flag) that signals whether it is a significant coefficient, or may be calculated through a separate counter. In the present disclosure, the number of non-separable transform kernels may be changed by dividing the range using numSigCoeff information of the current block or neighboring block. As an example, when using two ranges, the encoding apparatus may use one non-separable transform kernel if the value of numSigCoeff of the current block or neighboring block is less than or equal to a fourth threshold (if the number of significant coefficients in the block is small), otherwise, may use multiple non-separable transform kernels. As another example, if the value of numSigCoeff of the current block or neighboring block is less than or equal to the fourth threshold, non-separable transform is not applied and only separable transform (e.g., DCT-2) is applied, and, otherwise, one or multiple non-separable transform kernels may be used. As another example, if the value of numSigCoeff of the current block or neighboring block is greater than or equal to the fourth threshold, the encoding apparatus may use only non-separable transform or may use both separable transform and non-separable transform. As another example, when using three ranges, the encoding apparatus may use one non-separable transform kernel if the value of numSigCoeff of the current block or neighboring block is less than or equal to a fifth threshold, use K non-separable transform kernels if the value of numSigCoeff is greater than the fifth threshold and less than or equal to a sixth threshold, and use L non-separable transform kernels if the value of numSigCoeff is greater than the sixth threshold. At this time, if the significant coefficient in the current block exists only in the top-left pixel, that is, at the DC position, the above method is not applied, and separable transform (e.g., DCT-2) or a separately determined transform method may be applied.

In the present embodiment, the fourth threshold, the fifth threshold, the sixth threshold, and the number of threshold ranges may be experimentally determined values, and may be adaptively changed and applied according to the size of the current block.

As described above, it may be determined whether to perform non-separable primary transform on the current block based on numSigCoeff. The present embodiment may be combined with other embodiments of the present disclosure. For example, a determination process based on numSigCoeff may be added to the embodiment of FIG. 24 or the embodiment of FIG. 25. Alternatively, the determination process (S2401, S2501, or S2502) in the embodiment of FIG. 24 or FIG. 25 may be partially replaced. Alternatively, in order to determine whether to apply non-separable primary transform to the current block, in addition to or as an alternative to other embodiments of the present disclosure, both a determination regarding numSigCoeff and a determination regarding lastScanPos may be performed.

In the decoding apparatus, syntax regarding residuals may be parsed prior to syntax regarding non-separable transform information (whether to apply non-separable transform and/or non-separable transform index information). Whether to apply non-separable transform and/or a method of signaling non-separable transform index information according to the present disclosure may follow the 'transform index signaling method in non-separable primary transform'. More specifically, a first method may be applied when there is one non-separable primary transform kernel of the current block determined according to the above-described method, and a second method may be applied when there are multiple non-separable primary transform kernels of the current block determined according to the above-described method. If the number of non-separable primary transform kernels of the current block determined according to the above-described method is 0 (when the non-separable primary transform is not applied), non-separable primary transform related information (flag specifying whether to apply non-separable primary transform, etc., e.g., 1 bit flag, e.g., ciip_nspt_mode, gpm_nspt_mode) may not be transmitted.

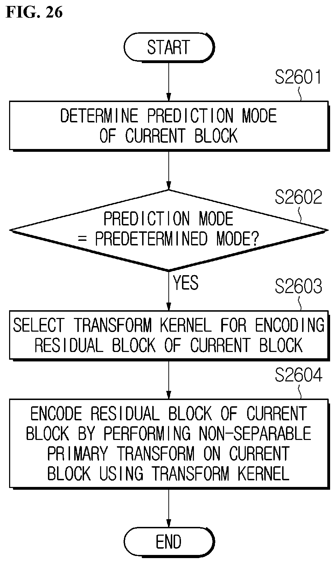

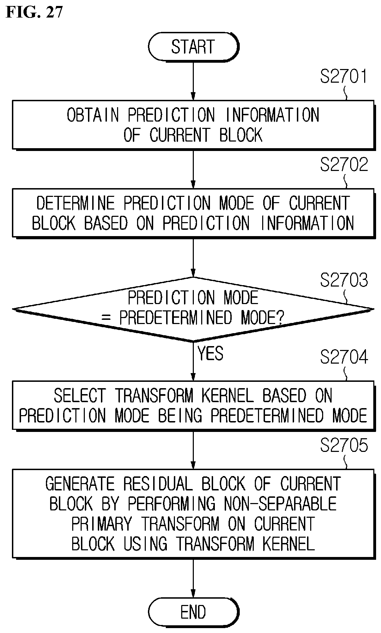

Hereinafter, an image encoding/decoding method according to an embodiment of the present disclosure will be described in detail with reference to FIGS. 26 and 27.

FIG. 26 is a flowchart illustrating an image encoding method according to an embodiment of the present disclosure.

The image encoding method of FIG. 26 may be performed by the image encoding apparatus of FIG. 2. For example, step S2604 may be performed by the transform unit 120.

Referring to FIG. 26, the image encoding apparatus may determine a prediction mode of a current block (S2601).

In one embodiment, the image encoding apparatus may determine the prediction mode of the current block through various methods such as RD-cost comparison. The image encoding apparatus may encode the determined prediction mode into a bitstream as prediction information.

The image encoding apparatus may determine whether the prediction mode is a predetermined mode (S2602). For example, the predetermined mode may be a CIIP mode or GPM. If the prediction mode of the current block is a predetermined mode ('YES' in S2602), the image encoding apparatus may select a transform kernel for encoding the residual block of the current block (S2603). At this time, the selected transform kernel may be a non-separable primary transform kernel.

Then, the image encoding apparatus may encode the residual block of the current block by performing non-separable primary transform on the current block using the transform kernel (S2604).

As described above, in one embodiment, whether to apply the non-separable primary transform may be determined based further on the number of pixels included in the current block. For example, if the number of pixels included in the current block is 16 or more but less than 1024, non-separable primary transform may be applied, and the number of pixels included in the current block is not limited to the above-described example.

Additionally, in one embodiment, the image encoding apparatus may determine whether to apply non-separable primary transform to the current block based on the prediction mode of the current block being a predetermined mode, and encode information indicating this.

In one embodiment, the transform kernel set or transform kernel applied to the non-separable primary transform may be adaptively selected based on information about the predetermined mode. For example, when the predetermined mode is a CIIP mode, information about the predetermined mode may include at least one of a CIIP weight or a CIIP intra mode. Here, the CIIP intra mode may be at least one of a planner mode, a CIIP_PDPC mode, a CIIP_DIMD mode, or a CIIP_TIMD mode. Alternatively, based on the predetermined mode being a GPM, the information about the predetermined mode may be at least one of a GPM index, an Angle index, or a Distance index.

In one embodiment, the image encoding apparatus may encode transform kernel selection information for the current block in order to signal the transform kernel selected for the current block. The transform kernel selection information may be information for selecting one transform kernel from one or more non-separable transform kernels and one or more separable transform kernels.

In one embodiment, whether to apply non-separable primary transform to the current block may be determined based further on residual characteristics of the current block or neighboring block. At this time, the residual characteristics may be determined based on the position of the last significant coefficient in the residual block of the current block or the number of significant coefficients in the residual block of the current block.

FIG. 27 is a flowchart illustrating an image decoding method according to an embodiment of the present disclosure.

The image decoding method of FIG. 27 may be performed by the image decoding apparatus of FIG. 3.

Referring to FIG. 27, the image decoding apparatus may obtain prediction information of a current block (S2701).

Specifically, the image decoding apparatus may parse (decode) information (prediction information) related to the prediction mode of the current block from a bitstream.

In addition, the image decoding apparatus may determine the prediction mode of the current block based on the prediction information (S2702).

In addition, the image decoding apparatus may determine whether the prediction mode is a predetermined mode (S2703). Based on the prediction mode of the current block being a predetermined mode, the image decoding apparatus may select a transform kernel for the current block (S2704). At this time, the selected transform kernel may be a non-separable primary transform kernel for generating a residual block of the current block.

In one embodiment, the predetermined mode may be one of a CIIP mode or a GPM.

Then, the image decoding apparatus may generate the residual block of the current block by performing non-separable primary transform on the current block using the transform kernel (S2705).

As described above, in one embodiment, whether to apply the non-separable primary transform may be determined based further on the number of pixels included in the current block. For example, if the number of pixels included in the current block is 16 or more but less than 1024, non-separable primary transform may be applied, and the number of pixels included in the current block is not limited to the above-described example.

Additionally, in one embodiment, the image decoding apparatus may obtain information specifying whether to apply non-separable primary transform to the current block based on the prediction mode of the current block being a predetermined mode. Whether to apply the non-separable primary transform to the current block may be determined based on the obtained information.

In one embodiment, the transform kernel set or transform kernel applied to the non-separable primary transform may be adaptively selected based on information about the predetermined mode. For example, when the predetermined mode is a CIIP mode, information about the predetermined mode may include at least one of a CIIP weight or a CIIP intra mode. Here, the CIIP intra mode may be at least one of a planner mode, a CIIP_PDPC mode, a CIIP_DIMD mode, or a CIIP_TIMD mode. Alternatively, based on the predetermined mode being a GPM, the information about the predetermined mode may be at least one of a GPM index, an Angle index, or a Distance index.

In one embodiment, the image decoding apparatus may obtain transform kernel selection information of the current block in order to select the transform kernel for the current block. The transform kernel selection information may be information for selecting one transform kernel from one or more non-separable transform kernels and one or more separable transform kernels.

In one embodiment, whether to apply non-separable primary transform to the current block may be determined based further on residual characteristics of the current block or neighboring block. At this time, the residual characteristics may be determined based on the position of the last significant coefficient in the residual block of the current block or the number of significant coefficients in the residual block of the current block.

According to embodiments of the present disclosure, it is possible to adaptively/selectively apply non-separable primary transform based on a predetermined prediction mode or various conditions, thereby improving coding efficiency.

Additionally, according to the signaling method of non-separable primary transform-related information of the present disclosure, an efficient signaling method can be provided in all cases where various types of transforms are applicable.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

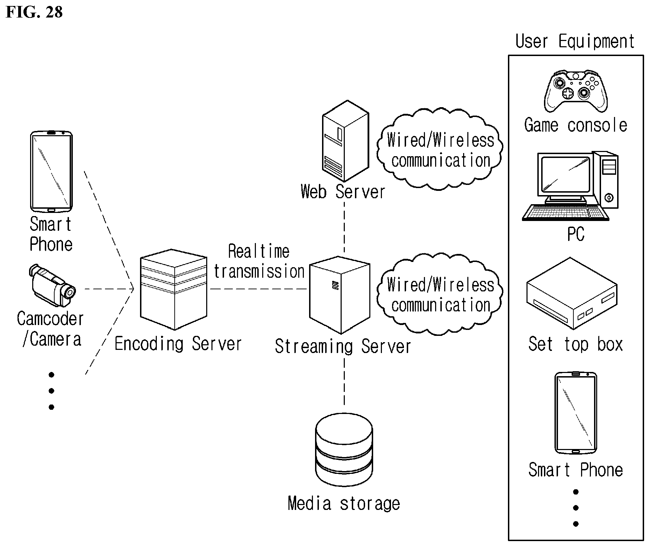

FIG. 28 is a view illustrating a content streaming system, to which an embodiment of the present disclosure is applicable.

As shown in FIG. 28, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1.  An image decoding method performed by an image decoding apparatus, the image decoding method comprising:

    obtaining prediction information of a current block;
    determining a prediction mode of the current block based on the prediction information;
    selecting a transform kernel for generating a residual block of the current block based on the prediction mode being a predetermined mode; and
    generating the residual block of the current block by performing non-separable primary transform on the current block based on the selected transform kernel.

2.  The image decoding method of claim 1, wherein the predetermined mode is one of a combined inter and intra prediction (CIIP) mode or a geometric partitioning mode (GPM).

3.  The image decoding method of claim 1, wherein whether to apply the non-separable primary transform is determined based further on a number of pixels included in the current block.

4. The image decoding method of claim 1, further comprising obtaining information specifying whether to apply the non-separable primary transform based on the prediction mode of the current block being the predetermined mode, wherein whether to apply the non-separable primary transform to the current block is determined based on the obtained information.

5. The image decoding method of claim 1, wherein a transform kernel set or transform kernel applied to the non-separable primary transform is adaptively selected based on information about the predetermined mode.

6. The image decoding method of claim 5, wherein the information about the predetermined mode comprises at least one of a CIIP weight or a CIIP intra mode, based on the predetermined mode being a CIIP mode.

7. The image decoding method of claim 6, wherein the CIIP intra mode is at least one of a planar mode, a CIIP_PDPC mode, a CIIP DIMD mode or a CIIP_TIMD mode.

8. The image decoding method of claim 5, wherein the information about the predetermined mode comprises at least one of a GPM index, an Angle index or a Distance index, based on the predetermined mode being a GPM mode.

9. The image decoding method of claim 1,

wherein the selecting the transform kernel for the current block comprises obtaining transform kernel selection information of the current block, and
wherein the transform kernel selection information is information for selecting one transform kernel from one or more non-separable transform kernels and one or more separable transform kernels.

10. The image decoding method of claim 1, wherein whether to apply the non-separable primary transform to the current block is determined based further on residual characteristics of the current block or neighboring block.

11. The image decoding method of claim 10, wherein the residual characteristics are determined based on a position of a last significant coefficient in the residual block of the current block or the number of significant coefficients in the residual block of the current block.

12. An image decoding apparatus comprising a memory and at least one processor, wherein the at least one processor is configured to:

obtain prediction information of a current block;
determine a prediction mode of the current block based on the prediction information;
select a transform kernel for generating a residual block of the current block based on the prediction mode being a predetermined mode; and
generate the residual block of the current block by performing non-separable primary transform on the current block based on the selected transform kernel.

13. An image encoding method performed by an image encoding apparatus, the image encoding method comprising:

determining a prediction mode of a current block;
selecting a transform kernel for encoding a residual block of the current block based on the prediction mode being a predetermined mode; and
encoding the residual block of the current block by performing non-separable primary transform on the current block based on the determined transform kernel.

14. The image encoding method of claim 13, wherein the predetermined mode is one of a combined inter and intra prediction (CIIP) mode or a geometric partitioning mode (GPM).

15. The image encoding method of claim 13, wherein whether to apply the non-separable primary transform is determined based further on a number of pixels included in the current block.

16. The image encoding method of claim 13, wherein a transform kernel set or transform kernel applied to the non-separable primary transform is adaptively selected based on information about the predetermined mode.

**17.** The image encoding method of claim 16,

wherein the information about the predetermined mode comprises at least one of a CIIP weight or a CIIP intra mode, based on the predetermined mode being a CIIP mode, and
wherein the CIIP intra mode is at least one of a planar mode, a CIIP_PDPC mode, a CIIP DIMD mode or a CIIP_TIMD mode.

**18.** The image encoding method of claim 16, wherein the information about the predetermined mode comprises at least one of a GPM index, an Angle index or a Distance index, based on the predetermined mode being a GPM mode.

**19.** A computer-readable recording medium storing a bitstream generated by an image encoding method, the image encoding method comprising:

determining a prediction mode of a current block;
selecting a transform kernel for encoding a residual block of the current block based on the prediction mode being a predetermined mode; and
encoding the residual block of the current block by performing non-separable primary transform on the current block based on the determined transform kernel.

**20.** A method of transmitting a bitstream generated by an image encoding method, the image encoding method comprising:

determining a prediction mode of a current block;
selecting a transform kernel for encoding a residual block of the current block based on the prediction mode being a predetermined mode; and
encoding the residual block of the current block by performing non-separable primary transform on the current block based on the determined transform kernel.

**FIG. 1**

**FIG. 2**

**FIG. 3**

**FIG. 4a**

**FIG. 4b**

**FIG. 4c**

**FIG. 4d**

**FIG. 5**

**FIG. 6**

**FIG. 7**

**FIG. 8**

**FIG. 9**

16 input coefficients for 4x4 forward LFNST
64 input coefficients for 8x8 forward LFNST

Forward low-frequency
non-separable transform

911

Forward
Primary
Transform

913

Quantization

bitstream

Inverse
Primary
Transform

923

Inverse low-frequency
non-separable transform

De-
Quantization

921

8 input coefficients for 4x4 inverse LFNST
16 input coefficients for 8x8 inverse LFNST

**FIG. 10**

START

S1010

DETERMINE TRANSFORM GROUP
CORRESPONDING TO CURRENT BLOCK

S1020

PERFORM TRANSFORM ON CANDIDATE
TRANSFORM COMBINATIONS AVAILABLE
WITHIN TRANSFORM GROUP

S1030

SELECT TRANSFORM COMBINATION
WITH LOWEST RD COST

S1040

ENCODE INDEX CORRESPONDING TO
SELECTED TRANSFORM COMBINATION

END

**FIG. 11**

```
                    START

                                    S1110

        DETERMINE TRANSFORM
        GROUP FOR CURRENT BLOCK

                                    S1120

        PARSE TRANSFORM COMBINATION
        INDEX IN TRANSFORM GROUP

                                    S1130

        DERIVE TRANSFORM COMBINATION
        CORRESPONDING TO TRANSFORM
        COMBINATION INDEX

                                    S1140

        PERFORM INVERSE TRANSFORM
        ON CURRENT BLOCK BASED ON
        TRANSFORM COMBINATION

                    END
```

**FIG. 12**

```
                                        S1210
   NO              CBF==1?

                     YES                S1220

        ENCODE TRANSFORM COEFFICIENT

                                        S1230
   NO          NSST INDEX
               CODING APPLIED?

                     YES                S1240

        ENCODE NSST INDEX
```

**FIG. 13**

```
         NO          ┌─────────────────┐  S1310
    ┌───────────────<    CBF==1?        >
    │                └─────────────────┘
    │                      │ YES      S1320
    │                      ▼
    │          ┌──────────────────────────────┐
    │          │ DECODE TRANSFORM COEFFICIENT │
    │          └──────────────────────────────┘
    │                      │
    │                      ▼
    │        NO       ┌─────────────────┐  S1330
    │     ┌──────────<   NSST INDEX      >
    │     │           │ CODING APPLIED?  │
    │     │           └─────────────────┘
    │     │                 │ YES      S1340
    │     │                 ▼
    │     │      ┌──────────────────────┐
    │     │      │   PARSE NSST INDEX   │
    │     │      └──────────────────────┘
    │     │                 │
    │     └─────────────────┤
    └───────────────────────┤
                            ▼
```

**FIG. 14**

$$t_m = x_m \cos\theta - x_n \sin\theta$$

$$t_n = x_m \sin\theta + x_n \cos\theta$$

**FIG. 15**

**FIG. 16**

Reduced
Transform

Residual ⟶ | Tx[] | ⟶ Coefficient

(a) forward RT

Reduced Inv.
Transform

Coefficient ⟶ | T$^t$x[] | ⟶ Residual

(b) inverse RT

**FIG. 17**

**FIG. 18**

**FIG. 19**

**FIG. 20**

**FIG. 21**

**FIG. 22a**

(a)

(b)

**FIG. 24**

```
        ┌─────────┐
        │  START  │
        └─────────┘
             │
             ▼
        ╱─────────────╲
       ╱  PREDICTION   ╲         S2401
      ╱ MODE OF CURRENT ╲
      ╲ BLOCK           ╱
       ╲ = PREDETERMINED╱
        ╲    MODE?     ╱
         ╲───────────╱
             │ YES            S2402
             ▼
 ┌──────────────────────────────┐
 │  APPLY NON-SEPARABLE PRIMARY  │
 │ TRANSFORM (NSPT) TO CURRENT BLOCK │
 └──────────────────────────────┘
             │
             ▼
        ┌─────────┐
        │   END   │
        └─────────┘
```

**FIG. 25**

```
        ┌─────────┐
        │  START  │
        └─────────┘
             │
             ▼
        ╱─────────────╲
       ╱  PREDICTION   ╲         S2501
      ╱ MODE OF CURRENT ╲
      ╲ BLOCK           ╱
       ╲ = PREDETERMINED╱
        ╲    MODE?     ╱
         ╲───────────╱
             │ YES
             ▼
      ╱──────────────────╲
     ╱  DO CONDITIONS      ╲      S2502
    ╱ REGARDING SIZE AND/OR ╲
    ╲ SHAPE OF CURRENT BLOCK╱ SATISFY
     ╲   PREDETERMINED     ╱
      ╲   CONDITION?      ╱
       ╲────────────────╱
             │ YES           S2503
             ▼
 ┌──────────────────────────────┐
 │  APPLY NON-SEPARABLE PRIMARY  │
 │ TRANSFORM (NSPT) TO CURRENT BLOCK │
 └──────────────────────────────┘
             │
             ▼
        ┌─────────┐
        │   END   │
        └─────────┘
```

**FIG. 26**

```
                    ┌─────────────┐
                    │    START    │
                    └─────────────┘
                           │
                           │               S2601
                           ▼
          ┌────────────────────────────────┐
          │   DETERMINE PREDICTION MODE     │
          │       OF CURRENT BLOCK          │
          └────────────────────────────────┘
                           │
                           │               S2602
                           ▼
              ╱───────────────────────╲
            ╱      PREDICTION MODE       ╲
            ╲   = PREDETERMINED MODE?    ╱
              ╲───────────────────────╱
                           │ YES
                           │               S2603
                           ▼
          ┌────────────────────────────────┐
          │ SELECT TRANSFORM KERNEL FOR ENCODING │
          │   RESIDUAL BLOCK OF CURRENT BLOCK │
          └────────────────────────────────┘
                           │
                           │               S2604
                           ▼
          ┌────────────────────────────────┐
          │  ENCODE RESIDUAL BLOCK OF CURRENT │
          │  BLOCK BY PERFORMING NON-SEPARABLE │
          │   PRIMARY TRANSFORM ON CURRENT    │
          │   BLOCK USING TRANSFORM KERNEL    │
          └────────────────────────────────┘
                           │
                           ▼
                    ┌─────────────┐
                    │     END     │
                    └─────────────┘
```

**FIG. 27**

START

OBTAIN PREDICTION INFORMATION
OF CURRENT BLOCK — S2701

DETERMINE PREDICTION MODE OF CURRENT
BLOCK BASED ON PREDICTION INFORMATION — S2702

PREDICTION MODE
= PREDETERMINED MODE? — S2703

YES

SELECT TRANSFORM KERNEL BASED ON
PREDICTION MODE BEING PREDETERMINED MODE — S2704

GENERATE RESIDUAL BLOCK OF CURRENT
BLOCK BY PERFORMING NON-SEPARABLE
PRIMARY TRANSFORM ON CURRENT
BLOCK USING TRANSFORM KERNEL — S2705

END

**FIG. 28**

| INTERNATIONAL SEARCH REPORT | International application No. |
|---|---|
| | **PCT/KR2022/014977** |

**A.     CLASSIFICATION OF SUBJECT MATTER**

**H04N 19/61**(2014.01)i; **H04N 19/11**(2014.01)i; **H04N 19/593**(2014.01)i; **H04N 19/107**(2014.01)i; **H04N 19/176**(2014.01)i; **H04N 19/184**(2014.01)i

According to International Patent Classification (IPC) or to both national classification and IPC

**B.     FIELDS SEARCHED**

Minimum documentation searched (classification system followed by classification symbols)

H04N 19/61(2014.01); H03L 7/08(2006.01); H03L 7/087(2006.01); H04N 19/103(2014.01); H04N 19/122(2014.01); H04N 19/176(2014.01); H04N 19/625(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 블록(block), 예측(prediction), 모드(mode), 잔차(residual), 변환(transform), 커널(kernel), 비분리(non-separable), 1차 변환(primary transform), CIIP(Combined inter and intra prediction), GPM(geometric partitioning mode)

**C.     DOCUMENTS CONSIDERED TO BE RELEVANT**

| Category* | Citation of document, with indication, where appropriate, of the relevant passages | Relevant to claim No. |
|---|---|---|
| Y | KR 10-2021-0118196 A (LG ELECTRONICS INC.) 29 September 2021 (2021-09-29) <br> See paragraph [0065]; and claims 1 and 10. | 1-5,9-16,19-20 |
| A | | 6-8,17-18 |
| Y | US 2018-0103252 A1 (QUALCOMM INCORPORATED) 12 April 2018 (2018-04-12) <br> See paragraphs [0168] and [0181]. | 1-5,9-16,19-20 |
| Y | WO 2021-108027 A1 (TENCENT AMERICA LLC) 03 June 2021 (2021-06-03) <br> See paragraphs [0116] and [0132]-[0133]. | 9-11 |
| A | LI, Xinwei et al. EE2-3.1: Combination of CIIP and DIMD/TIMD. Joint Video Experts Team (JVET) of ITU-T SG 16 WP 3 and ISO/IEC JTC 1/SC 29, 24th Meeting, by teleconference. JVET-X0098-v1. 30 September 2021. [Retrieved on 02 January 2023]. Retrieved from <URL: https://www.jvet-experts.org/doc_end_user/current_document.php?id=11091>. <br> See pages 1-3. | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 January 2023** | **19 January 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/014977** |

**C.      DOCUMENTS CONSIDERED TO BE RELEVANT**

| Category* | Citation of document, with indication, where appropriate, of the relevant passages | Relevant to claim No. |
| --- | --- | --- |
| A | YOSHITAKA, Kidani et al. AHG12: GPM with inter and intra prediction. Joint Video Experts Team (JVET) of ITU-T SG 16 WP 3 and ISO/IEC JTC 1/SC 29, 23rd Meeting, by teleconference. JVET-W0110-v2. 09 July 2021. [Retrieved on 02 January 2023]. Retrieved from <URL: https://www.jvet-experts.org/doc_end_user/current_document.php?id=10926>.<br>        See pages 1-3. | 1-20 |

Form PCT/ISA/210 (second sheet) (July 2022)

**INTERNATIONAL SEARCH REPORT**
Information on patent family members

International application No.

**PCT/KR2022/014977**

| Patent document cited in search report | | | Publication date (day/month/year) | Patent family member(s) | | | Publication date (day/month/year) |
|---|---|---|---|---|---|---|---|
| KR | 10-2021-0118196 | A | 29 September 2021 | KR | 10-2022-0147731 | A | 03 November 2022 |
| | | | | US | 2022-0174303 | A1 | 02 June 2022 |
| | | | | WO | 2020-184991 | A1 | 17 September 2020 |
| US | 2018-0103252 | A1 | 12 April 2018 | US | 11095893 | B2 | 17 August 2021 |
| WO | 2021-108027 | A1 | 03 June 2021 | CN | 113853745 | A | 28 December 2021 |
| | | | | EP | 4066385 | A1 | 05 October 2022 |
| | | | | JP | 2022-526400 | A | 24 May 2022 |
| | | | | KR | 10-2021-0135320 | A | 12 November 2021 |
| | | | | US | 11375220 | B2 | 28 June 2022 |
| | | | | US | 2021-0160519 | A1 | 27 May 2021 |

Form PCT/ISA/210 (patent family annex) (July 2022)